(19) Europäisches Patentamt
European Patent Office
Office européen des brevets

(11) **EP 3 967 491 A1**

(12) **EUROPEAN PATENT APPLICATION**

(43) Date of publication:
**16.03.2022   Bulletin 2022/11**

(21) Application number: **20196118.2**

(22) Date of filing: **15.09.2020**

(51) International Patent Classification (IPC):
**B32B 27/08** (2006.01)    **B32B 27/20** (2006.01)
**B32B 27/30** (2006.01)

(52) Cooperative Patent Classification (CPC):
**B32B 27/08; B32B 27/20; B32B 27/304;**
**B32B 27/308;** B32B 2264/10; B32B 2270/00;
B32B 2274/00; B32B 2307/412; B32B 2307/416;
B32B 2307/546; B32B 2307/71; B32B 2419/00;
B32B 2571/00

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Röhm GmbH**
**64295 Darmstadt (DE)**

(72) Inventors:
• **STRUWE, Kim**
**60598 Frankfurt am Main (DE)**
• **GUÉNANTEN, Claude**
**64291 Darmstadt (DE)**
• **ARNDT, Thomas**
**64750 Lützelbach (DE)**

(74) Representative: **Röhm Patent Association**
**IP Management**
**Deutsche-Telekom-Allee 9**
**64295 Darmstadt (DE)**

(54) **HEAT REFLECTIVE FOILS WITH IMPROVED MECHANICAL PROPERTIES AND A HIGH WEATHERING RESISTANCE**

(57)    The present invention relates to an extruded foil comprising at least one layer in which platelet-shaped filler particles are uniformly distributed in a polymer matrix comprising at least one fluoropolymer and at least one further layer. The foil has a particularly high TSR, a high weathering resistance and excellent mechanical properties. Therefore, the foil of the present invention is highly suitable for surface-protection of materials such as polyvinyl chloride (PVC) and for use in highpressure laminates (HPLs).

Fig. 1

**Description**

**Field of the invention**

The present invention relates to a multilayer foil comprising at least one layer in which platelet-shaped filler particles are uniformly distributed in a polymer matrix comprising at least one fluoropolymer. The foil has a high total solar reflectance (TSR) value, a high weathering resistance and excellent mechanical properties. Therefore, the foil of the present invention is highly suitable for surface-protection of materials such as polyvinyl chloride (PVC) and for use in high-pressure laminates (HPLs).

**Prior art**

Polymethyl methacrylate (PMMA) has excellent optical properties and a high weathering resistance and is therefore particularly suitable for various outdoor applications. PMMA foils are commonly employed for long term protection of UV-sensitive substrates such as e.g. coloured polyvinyl chloride (PVC) window profiles. While white PVC window profiles were dominating markets of construction materials in the past decades, there is an ongoing trend to aesthetically more appealing window profiles having various decors, in particular to those in dark colours.

Dark coloured substrates such as window profiles tend to absorb a considerable amount of solar infrared (IR) radiation. In particular, dark window profiles can reach temperatures as high as 60 to 65 °C in summer, which may lead to undesired material softening and window profile deformation.

One possible approach addressing this problem relies on use of soft decorative PVC films comprising an isotropic IR reflecting pigment such as titanium dioxide, lead chromate, chromium oxide or anthraquinone pigments. An alternative approach, which is for instance described in DE 2719170 A1, makes use of acrylic-based surface coatings comprising IR reflecting pigments in combination with UV absorbers and light stabilisers. Such surface coatings may be designed to be substantially transparent for visible light. Alternatively, as described in e.g. WO 2006/058584 A1 they may reflect IR light and absorb visible light and therefore have a dark appearance.

EP 0 548 822 A2 describes light-permeable IR-reflecting body comprised of a light-permeable plastic material and IR-reflecting particles oriented parallel to the surface. The light-permeable IR-reflecting body has a transmittance (T) in the visible range of 45-75%, an overall energy permeability (g) of 30-60%, and a T/g ratio of > 1.15. The IR-reflecting particles are oriented parallel to the surface and disposed in the coating layer, which is 5 to 40 $\mu$m thick and adheres to the base material.

In order to achieve a high reflection of solar IR radiation and high TSR, acrylic foils of the prior art often comprise IR reflecting pigments in amounts as high as 20 - 40 wt. %. Presence of IR reflecting pigments in acrylic matrix in such amounts is disadvantageous because it renders the foil brittle and difficult to handle. In order to compensate these drawbacks at least to some extent, the acrylic foil often comprises large amounts of impact modifying agents. However, the resulting acrylic foil often has undesirably high haze. As a consequence, end-consumer products such as window profiles have an aesthetically disadvantageous turbid appearance, which is particularly disturbing in combination with printed high-quality decors.

Finally, acrylic foils employed as surface layers for outdoor applications are typically manufactured by extrusion, stored and transported in rolls and laminated onto substrates such as window profiles by manufacturers of end-consumer products. Accordingly, acrylic foils need to have appropriate mechanical properties to enable their manufacturing, storage and use in a fast, reliable and cost-efficient manner. Foils with high amounts of IR reflecting pigments in the acrylic matrix may break or rupture during any of the above processes thereby causing disruptions of the manufacturing processes.

**Object of the invention**

In view of the above, the object addressed by the present invention was provision of a transparent weathering resistant foil having good IR reflecting properties and an excellent mechanical stability as well as excellent optical properties, in particular a high transparency. Such foil should be suitable for industrial manufacturing by means of extrusion, and for use as a surface layer for protection of decorative substrates from solar IR and UV radiation.

**Summary of the invention**

The present invention is based on a surprising finding that when platelet-shaped filler particles are incorporated into a relatively thin fluoropolymer layer of a multi-layer acrylic foil, the resulting foil has a higher IR reflectance and higher mechanical strength, in particular a higher flexibility in comparison to a monolayer acrylic foil comprising the same amounts of the platelet-shaped filler particles.

When the multi-layer foil of the present invention is co-extruded, the platelet-shaped filler particles become oriented to a sufficient degree during the flow of the fluoropolymer layer through the co-extrusion nozzle. The particles gain a substantially parallel orientation in respect to the surface of the foil. The resulting multilayer foil has not only excellent optical properties (high TSR, high transmittance) but also a high mechanical stability and a high flexibility. The impact on mechanical properties is lower than in case of identical fillers dispersed in an acrylic matrix. This observation is highly surprising because, according to a common believe, a poor adhesion between the highly hydrophobic fluoropolymer matrix and a particulate filler was expected to result in a system with poor mechanical properties.

Hence, the inventors could overcome several drawbacks of acrylic foils of the prior art by using a separate relatively thin fluoropolymer layer and locating the IR reflecting pigments in form of a platelet-shaped filler particles in this fluoropolymer layer rather than in the acrylic layer.

The foil of the present invention has a slightly structured aesthetically appealing surface. This effect is produced by the platelet-shaped filler particles on the surface of the foil, with, in a preferred embodiment, said particles slightly projecting out (protruding) from the foil surface. The particles provide a slight diffuse light dispersion which reduces reflection of the light and thereby reduces glossiness.

The inventors found that during the lamination process, even at temperatures as high as 120 °C or even higher the foil of the present invention remains uniformly matt and the mechanical pressure of the laminating roll does not cause the particles to "sink" into the foil material. Instead, the particles remain visible on the surface of the resulting laminated article and ensure its uniform matt appearance. Also the surface roughness remains substantially unchanged. The term "uniform" as used herein means that the concentration of the platelet-shaped filler particles within the foil is substantially constant.

In summary, the foil of the present invention provides the following advantages:

- It has a high TSR value and good mechanical properties.
- It has an excellent weathering resistance and a very good chemicals resistance, for example with respect to commercially available cleaning compositions.
- It has dirt-repellent properties, to ease cleaning.
- It remains uniformly matt over a prolonged period.
- It can be manufactured in an extrusion plant in a cost-effective manner.
- It can be employed for lamination of various substrates at varying temperatures and upon using different lamination equipment. The appearance of the resulting laminated product is highly uniform and substantially independent on the processing conditions such as lamination temperature or material of the lamination rolls.

The first aspect of the present invention relates to a coextruded multilayer foil comprising at least a layer A and a layer B, wherein the layer A comprises, based on the weight of the layer A:

from 40.0 to 99.99 wt.-% of a fluoropolymer;
from 0.0 to 30.0 wt.-% of a polyalkyl(meth)acrylate; and
from 0.01 to 30.0 wt.-% of platelet-shaped filler particles having an aspect ratio of a least 1 to 10, preferably 1 to 20, more preferably 1 to 30.

The layer B comprises, based on the weight of the layer B:

from 0.0 to 95.0 wt.-% of a poly(methyl)methacrylate;
from 5.0 to 95.0 wt.-% of one or several impact modifiers;
from 0.0 to 40.0 wt.-% of a fluoropolymer;
from 0.0 to 5.0 wt.-% of one or several UV-absorbers;
from 0.0 to 5.0 wt.-% of one or several UV-stabilizers; and
from 0.0 to 20.0 wt.-% of an adhesion promoter selected from an adhesion-promoting copolymer, particulate silica or a combination thereof.

The cumulative content of the poly(methyl)methacrylate and of one or several impact modifiers in the layer B is at least 50 wt.-%, preferably at least 60 wt.-%, more preferably at least 70 wt.-%, yet even more preferably at least 80 wt.-%, still more preferably at least 90 wt.-%, particularly preferably at least 95 wt.-%, based on the weight of the layer B.

As will be readily appreciated by a skilled person, the term "foil" as used herein, refers to a sheet having a thickness below 5 mm, more preferably, below 1 mm. Although the foil of the present invention can be advantageously used as a protective coating, the term "foil" as used in the present application should be generally distinguished from terms such as "film" or "coating". A coating is typically a top layer of a multi-layer substrate and cannot be handled separately from said substrate. In contrast to a coating, the foil of the present invention is not necessarily a layer of a multi-layer article i.e. is not necessarily attached to any substrate and can therefore be separately handled and used for a variety of different purposes.

The foil of the present invention is superior in terms of weathering resistance and mechanical resistance to IR reflective foils available on the market and has an improved stability over a prolonged period (> 10 years = long-term stability). The term *"stability"* as used herein refers not only to the intrinsic stability of the foil with respect to weathering effects and mechanical damages but also to sustainability of its protective action in terms of IR reflecting properties and UV absorption. The term *"infrared (IR) radiation"* refers to light having wavelength from 780 nm to 2500 nm.

A further aspect of the present invention relates to process for the manufacturing of the foil, wherein the process comprises a step in which the foil is moulded in a foil-moulding process, preferably in chill-roll process.

In yet a further aspect, the invention is directed to a multi-layer article, preferably a high-pressure laminate or an extruded PVC article, comprising a substrate which is at least partially covered by the foil, wherein

the layer A forms an outer surface of the multi-layer article;

the layer B is located between the layer A and the substrate; and

the layer C, if present, is located between the layer B and the substrate.

**Brief description of the drawings**

**Figure 1** is a schematic illustration of a foil of the present invention consisting of the fluoropolymer-based layer A and an acrylic-based layer B:

1. fluoropolymer-based layer A
2. fluoropolymer matrix
3. platelet shaped particles
4. acrylic-based layer B

**Figure 2** schematically illustrates an embodiment of a foil comprising a fluoropolymer-based layer A, an acrylic-based layer B and an adhesion-promoting layer C:

1. fluoropolymer-based layer A
2. fluoropolymer matrix
3. platelet shaped particles
4. acrylic-based layer B
5. adhesion-promoting layer C

**Detailed description of the preferred embodiments**

**Layer A**

The foil of the present invention comprises a fluoropolymer-based layer A in which non-agglomerated platelet-shaped filler particles are substantially uniformly dispersed in a polymer matrix.

In one preferred embodiment, the layer A comprises substantially no polyalky(meth)acrylate and has the following composition:

from 80.0 to 99.9 wt.-%, preferably from 90.0 to 99.9 wt.-% of the fluoropolymer; and
from 0.1 to 20.0 wt.-%, preferably from 0.1 to 10.0 wt.-% of platelet-shaped filler particles, based on the weight of the layer A.

Alternatively, the polymer matrix of the layer A may comprise a combination of a fluoropolymer e.g. PVDF and at least one further polymer such as polyalky(meth)acrylate such as PMMA. In this embodiment, the content of the fluoropolymer is typically from 40.0 to 97.0 wt.-% and the content of the polyalky(meth)acrylate is from 0.0 to 45.0 wt.-%, based on the weight of the layer A. This corresponds to the weight ratio fluoropolymer : polyalkyl(meth)acrylate from about 1 : 1 to about 1 : 0. As will be readily appreciated by a skilled person, the exact composition of the polymer matrix in the layer A can be adjusted depending on the intended use of the foil. A particularly weathering-resistant foil can be obtained by using the combination of PMMA/PVDF if the weight ratio of PVDF : PMMA is from 1.0 : 0.01 to 1 : 1 (w/w), more preferably from 1.0 : 0.15 to 1.0 : 0.40 (w/w), the ratio from 1.0 : 0.15 to 1.0 : 0.30 (w/w) being particularly preferable.

**Layer B**

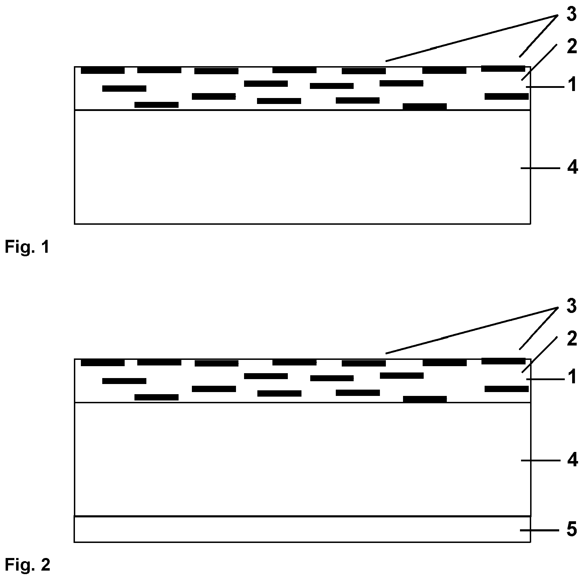

The foil of the present invention further comprises a layer B which is typically directly adjacent to the layer A (cf. Figure 2). The cumulative content of impact modified polyalkyl (meth)acrylate in the layer B is at least 50 wt.-%, preferably at least 60 wt.-%, more preferably at least 70 wt.-%, yet even more preferably at least 80 wt.-%, still more preferably at least 90 wt.-%, particularly preferably at least 95 wt.-%, based on the weight of the layer B. As a further component, the layer B may optionally comprise at least one fluoropolymer such as PVDF.

The composition of the layer B is as follows, based on the total weight of the layer B:

from 0.0 to 95.0 wt.-%, preferably from 10.0 to 90.0 wt.-% of a polyalkyl (meth)acrylate
from 5.0 to 100.0 wt.-%, preferably from 10.0 to 90.0 wt.-% of one or several impact modifiers
from 0.0 to 40.0 wt.-%, preferably from 0.0 to 30.0 wt.-%, more preferably from 0.0 to 20.0 wt.-% of a fluoropolymer
from 0.0 to 5.0 wt.-%, preferably from 0.2 to 4.0 wt.-%, more preferably 0.3 to 3.0 wt.-% of one or several UV absorbers
from 0.0 to 5.0 wt.-%, preferably from 0.2 to 4.0 wt.-%, more preferably 0.3 to 3.0 wt.-% of one or several UV stabilizers; and
from 0.0 to 20.0 wt.-%, preferably from 0.0 to 10.0 wt.-% of an adhesion promoter selected from an adhesion-promoting copolymer, particulate silica or a combination thereof.

Preferably, the polyalkyl (meth)acrylate in the layer B is PMMA as described below and the fluoropolymer, if present, is PVDF. Furthermore, depending on the substrate on which the foil is applied, the layer B may also be substantially free of the adhesion promoter.

**Layer C**

In addition to the layers A and B described above, the foil of the present invention may optionally comprise an adhesion-promoting layer C, so that the layer B is located between the layer A and the layer C. In this embodiment the layer C acts as an adhesion-promoting layer and therefore necessarily comprises an adhesion promoter selected from particulate silica, an adhesion-promoting copolymer or a combination thereof. In general, if the multilayer foil comprises the layer C, the layer B comprises less than 3.0 wt.-%, preferably less than 1.0 wt.-%, based on the weight of the layer B, of the adhesion promoter.

In order to achieve an excellent adhesion of the foil on substrates such as HPL the cumulative content of particulate silica and the adhesion-promoting copolymer in the layer C is chosen to be at least 2.0 wt.-%, preferably at least 4.0 wt.-%, more preferably at least 6.0 wt.-%, yet even more preferably at least 8.0 wt.-%, and the content of impact modified polyalkyl (meth)acrylate in the layer C is at least 60 wt.-%, preferably at least 60 wt.-%, more preferably at least 70 wt.-%, yet even more preferably at least 80 wt.-%, based on the weight of the layer C.

In general, the layer C consists of a moulding composition comprising

from 0.0 to 78.0 wt.-% of a polyalkyl (meth)acrylate
from 20.0 to 98.0 wt.-% of one or several impact modifiers
from 0.0 to 40.0 wt.-% of a fluoropolymer
from 0.0 to 40.0 wt.-% of particulate silica
from 0.0 to 40.0 wt.-% of an adhesion-promoting copolymer
from 0.0 to 5.0 wt.-% of one or several UV absorbers
from 0.0 to 5.0 wt.-% of one or several UV stabilizers.

In one embodiment, the layer C comprises particulate silica and no adhesion-promoting copolymer. Hence, the layer C consists of a moulding composition comprising

from 0.0 to 78.0 wt.-%, preferably from 0.0 to 65.0 wt.-%, more preferably from 0.0 to 53.0 wt.-%, still more preferably from 0.0 to 43.0 wt.-%, particularly preferably from 0.0 to 33.0 wt.-% of a polyalkyl (meth)acrylate
from 20.0 to 98.0 wt.-%, preferably from 30.0 to 95.0 wt.-%, more preferably from 40.0 to 93.0 wt.-%, still more preferably from 50.0 to 93.0 wt.-%, particularly preferably from 60.0 to 93.0 wt.-% of one or several impact modifiers
from 2.0 to 40.0 wt.-%, preferably from 5.0 to 30.0 wt.-%, more preferably from 7.0 to 20.0 wt.-% of particulate silica
from 0.0 to 5.0 wt.-% of one or several UV absorbers
from 0.0 to 5.0 wt.-% of one or several UV stabilizers.

In yet a further embodiment, the layer C comprises an adhesion-promoting copolymer and no particulate silica. Hence, in this embodiment, the layer C consists of a moulding composition comprising

from 0.0 to 78.0 wt.-%, preferably from 0.0 to 65.0 wt.-%, more preferably from 0.0 to 53.0 wt.-%, still more preferably from 0.0 to 43.0 wt.-%, particularly preferably from 0.0 to 33.0 wt.-% of a polyalkyl (meth)acrylate

from 20.0 to 98.0 wt.-%, preferably from 30.0 to 95.0 wt.-%, more preferably from 40.0 to 93.0 wt.-%, still more preferably from 50.0 to 93.0 wt.-%, particularly preferably from 60.0 to 93.0 wt.-% of one or several impact modifiers

from 2.0 to 40.0 wt.-%, preferably from 5.0 to 35.0 wt.-%, more preferably from 7.0 to 30.0 wt.-% of an adhesion-promoting copolymer

from 0.0 to 5.0 wt.-% of one or several UV absorbers

from 0.0 to 5.0 wt.-% of one or several UV stabilizers.

In this embodiment, the layer C comprises from 2.0 to 40.0 wt.-%, preferably from 5.0 to 35.0 wt.-%, more preferably from 7.0 to 30.0 wt.-% of an adhesion-promoting copolymer, based on the weight of the layer C. Accordingly, the amount of the adhesion-promoting monomer in the moulding composition of the layer C is typically from 0.1 to 10.0 wt.-%, preferably from 0.5 to 8.0 wt.-%, more preferably from 1.0 to 5.0 wt.-%, based on the weight of the layer C.

In yet a further embodiment, the layer C comprises an adhesion-promoting copolymer in combination with particulate silica. Hence, in this embodiment, the layer C consists of a moulding composition comprising

from 0.0 to 78.0 wt.-%, preferably from 0.0 to 65.0 wt.-%, more preferably from 0.0 to 53.0 wt.-%, still more preferably from 0.0 to 43.0 wt.-%, particularly preferably from 0.0 to 33.0 wt.-% of a polyalkyl (meth)acrylate

from 20.0 to 98.0 wt.-%, preferably from 30.0 to 95.0 wt.-%, more preferably from 40.0 to 93.0 wt.-%, still more preferably from 50.0 to 93.0 wt.-%, particularly preferably from 60.0 to 93.0 wt.-% of one or several impact modifiers

from 1.0 to 20.0 wt.-%, preferably from 2.0 to 17.0 wt.-%, more preferably from 4.0 to 15.0 wt.-% of particulate silica

from 1.0 to 20.0 wt.-%, preferably from 3.0 to 20.0 wt.-%, more preferably from 7.0 to 15.0 wt.-% of an adhesion-promoting copolymer

from 0.0 to 5.0 wt.-% of one or several UV absorbers

from 0.0 to 5.0 wt.-% of one or several UV stabilizers.

In this embodiment, the layer C comprises from 1.0 to 20.0 wt.-%, preferably from 3.0 to 20.0 wt.-%, more preferably from 7.0 to 15.0 wt.-% of an adhesion-promoting copolymer, based on the weight of the layer C. Accordingly, the amount of the adhesion-promoting monomer in the moulding composition of the layer C is typically from 0.05 to 5.0 wt.-%, preferably from 0.25 to 4.0 wt.-%, more preferably from 0.5 to 2.5 wt.-%, based on the weight of the layer C.

Presence of one or several impact modifiers in the moulding composition of the layer C is essential to ensure a good tear resistance of the foil and excellent adhesive properties. Hence, the layer C comprises from 20.0 to 98.0 wt.-%, preferably from 30.0 to 95.0 wt.-%, more preferably from 40.0 to 93.0 wt.-%, still more preferably from 50.0 to 93.0 wt.-%, particularly preferably from 60.0 to 93.0 wt.-% of one or several impact modifiers, based on the weight of the layer C. Preferably, the amount of the rubbery content of the one or several impact modifiers in the moulding composition of the layer C is from 6.0 to 35.0 wt.-%, preferably from 10.0 to 30.0 wt.-%, more preferably from 12.0 to 25.0 wt.-%, still more preferably from 15.0 to 20.0 wt.-%, particularly preferably from 60.0 to 93.0 wt.-% of one or several impact modifiers, based on the weight of the layer C.

**Description of individual components of layers A-C**

Platelet-shaped filler particles

Suitable platelet-shaped filler particles dispersed in the layer A can be readily selected by a skilled person based on the desired optical appearance of the foil and their choice is not particularly limited as long as the particles *per se* are capable of reflecting IR radiation and have the desired aspect ratio. Examples of suitable particles include but are not limited to optionally coated mica, optionally coated metallic flakes such as aluminium flakes, optionally coated talk, optionally coated kaolin, optionally coated glass flakes or a combination of any of those. Particularly preferred platelet-shaped fillers are mica, talc, kaolin or glass. In addition, metal platelets, such as, for example, aluminium platelets or platelet-like metal oxides, such as, for example, platelet-like iron oxide or bismuth oxychloride are also suitable.

Use of so-called *"pearl gloss pigments"* as platelet-shaped filler particles showed be particularly advantageous. Typically, these pigments are comprised of coated platelets of a mineral material, usually mica, with a thickness of from 200 to 2000 nm, preferably from 300 to 600 nm; and a diameter of from 5 to 100 $\mu$m, preferably from 20 to 60 $\mu$m, and a mean diameter of from 20 to 70 $\mu$m, preferably from 20 to 25 $\mu$m. The corresponding filler particles are described *inter alia* in US 5,221,341 A.

For instance, platelet-shaped filler particles may be mica particles coated with

- at least one layer comprising titanium dioxide, wherein the titanium dioxide is preferably rutile;

- optionally, at least one layer comprising tin dioxide; and
- optionally, at least one layer comprising zircon dioxide.

In particular, suitable coated mica particles may comprise
from 30 to 60 wt._%, preferably from 40 to 50 wt._% titanium dioxide
from 0.0 to 4.0 wt.-%, preferably from 0.0 to 2.0 wt.-% tin dioxide; and
from 0.0 to 5.0 wt.-%, preferably from 1.0 to 3.0 wt.-% zircon dioxide,
the rest being mica and, optionally $SiO_2$.

Mica is a naturally occurring mineral material which contains metallic elements such as potassium, magnesium, aluminium and iron. Many types of micas can be readily distinguished by their colour, the most common varieties being muscovite mica and phlogopite mica. The present invention contemplates use of any types of naturally occurring mica. The benefits of the invention can be obtained with any of the various currently available micas. To prepare them for use in the present invention, it is preferred to grind and classify the samples of mica to obtain fractions having well defined particle dimensions and aspect ratios. Wet grinding of mica is preferred for producing thin, high quality flakes.

To deposit the titanium dioxide on the mica particles, the particles can be dispersed in an aqueous titanyl sulphate solution, and the suspension is then heated, as is described in DE 1,467,468. In the process described in DE 2,009,566, an aqueous solution of a titanium salt and a base are simultaneously metered into an aqueous suspension of mica particles to be coated at a pH suitable for depositing titanium dioxide, while maintaining the pH substantially constant by the addition of a base. Since the rutile modification of titanium dioxide has a higher refractive index than the anatase modification and mica substrates which are coated, for example, with rutile titanium dioxide have a significantly higher gloss than anatase titanium dioxide mica pigments, the rutile modification is often preferred. A process for depositing titanium dioxide in rutile form on mica is described, for example, in DE 2,214,545. The processes for coating mica particles with titanium dioxide mentioned here are merely given by way of example and are intended merely to illustrate the invention. However, it is also possible to use other processes not mentioned here explicitly. After being coated with titanium dioxide, the coated mica particles are usually separated off, washed and, if desired, dried or ignited. Particularly advantageous is titanium dioxide which is precipitated onto mica particles or similar platelet-shaped mineral materials in a defined layer thickness. The resulting material provides light-scattering coatings which are particularly well suited for use in the foil of the present invention.

The platelet-shaped filler particles can initially be coated with one or more other metal oxide layers consisting of, for example, chromium oxide, iron oxide, zirconium oxide, alumina, tin oxide and/or further metal oxides, before the titanium dioxide layer is applied. Processes for depositing other metal oxides are described, for example, in DE 1,959,998, DE 2,215,191, DE 2,244,298, DE 2,313,331, DE 2,522,572, DE 3,137,808, DE 3,151,343, DE 3,151,354, DE 3,151,355, DE 3,211,602 or DE 3,235,017. Preferably employed fillers typically do not contain more than 2 and in particular only one or no further metal oxide layer underneath the titanium dioxide layer.

Suitable platelet-shaped filler particles are also commercially available from Merck KGaA, Darmstadt under the trademark Iriotec®; preferred fillers include Iriotec® 9770, Iriotec® 9230, Iriotec® 9880, Iriotec® 9870, and Iriotec® 9875. Alternatively, platelet-shaped fillers available from Merck KGaA under the trademark Iriodin® may also be used, the corresponding fillers include but are not limited to Iriodin® 9502 Red-Brown SW, Iriodin® 9504 Red SW, Iriodin® 9524 Red Satin SW, Iriodin® 363 Shimmer Gold, Iriodin® 223 Rutile Fine Lilac, Iriodin® 9219 Rutile Lilac Pearl SW, Iriodin® 9507 Scarab Red SW, Iriodin® 211 Rutile Fine Red, Iriodin® 201 Rutile Fine Gold, Iriodin® 249 Flash Gold, Iriodin® 259 Flash Red, Iriodin® 289 Flash Blue, Iriodin® 299 Flash Green, Iriodin® 231 Rutile Fine Green, Iriodin® 355 Glitter Gold, Iriodin® 302 Gold Satin, Iriodin® 500 Bronze, Iriodin® 504 Red, Iriodin® 530 Glitter Bronzea and Iriodin® 502 Red-Brown.

Depending on the desired degree of IR reflection, the content of the platelet-shaped filler particles dispersed in the polymeric matrix of the layer A is usually from 0.01 to 20.0 wt.-%, more preferred from 0.1 to 10.0 wt.-%, based on the weight of the layer A.

In some embodiments, the polymer matrix of the fluoropolymer-based layer A substantially consists of one or several fluoropolymers such as PVDF. In these embodiments, the content of the fluoropolymer(s) is typically from 80.0 to 99.99 wt.-%, more preferably from 90.0 to 99.9 wt.-%, based on the weight of the fluoropolymer-based layer A. Accordingly, the fluoropolymer-based layer A typically comprises from 0.01 to 20.0 wt.-%, preferably from 0.1 to 10.0 wt.-% of platelet-shaped filler particles, based on the weight of the fluoropolymer-based layer A.

The platelet-shaped filler particles may have an aspect ratio of at least about 1 : 10, more preferably at least about 1 : 20, even more preferably at least about 1 : 30. The term *"aspect ratio"* as used herein refers to the ratio of the average thickness of the platelet-shaped filler particles to their average diameter. Average diameter and average thickness of the platelet-shaped filler particles can be determined using a two two-dimensional photomicrograph of 10 random particles. One of the photographs is taken in machine direction (extrusion direction) and the other one transverse to machine direction. The 10 random particles in each photograph are measured in their two dimensions. The average diameter is then calculated from 20 obtained lengths. A scanning electron microscope such as e.g. JEOL JSM-IT300 (commercially available from JEOL GmbH, Freising, Germany) can be advantageously used for this purpose. A sample piece of the foil having a suitable size for the measurement can be obtained by freezing the foil in liquid nitrogen and mechanically breaking it. The freshly obtained fracture surface is photographed using the scanning electron microscope.

Depending on the desired optical properties of the foil and the desired surface roughness, the size of the platelet-shaped filler particles (average diameter, weight averaged) is typically chosen to be from 0.1 $\mu$m to 150.0 $\mu$m, preferably from 1.0 $\mu$m to 100.0 $\mu$m, even more preferably from 5.0 $\mu$m to 80.0 $\mu$m. The thickness of the platelet-shaped filler particles is typically selected to be from 0.1 $\mu$m to 10.0 $\mu$m, preferably from 2.50 $\mu$m to 5.0 $\mu$m.

The average thickness of the foil and the average thickness of individual layers are advantageously determined using photomicrographs obtained using a scanning electron microscope such as JEOL JSM-IT300 (commercially available from JEOL GmbH, Freising, Germany). A sample piece having a suitable size for the measurement can be obtained by freezing the foil in liquid nitrogen and mechanically breaking it. The freshly obtained fracture surface is photographed using the scanning electron microscope.

Fluoropolymers

Depending on the intended use of the foil of the present invention the fluoropolymer may be selected from polyvinylidene fluoride (PVDF), polyvinylfluoride (PVF), polytetrafluorethylene (PTFE), polyethylenetetrafluoroethylene (ETFE), fluorinated ethylene-propylene (FEP) or a mixture thereof.

The PVDF polymers used in the foil are generally transparent, semicrystalline, thermoplastic fluoroplastics. Advantageously, the PVDF has a high crystalline fusing point. The heat resistance of the foil is particularly high when the crystalline fusing point of the PVDF is at least 150 °C and more preferably at least 160 °C. The upper limit of the crystalline fusing point is preferably approximately 175 °C, which is equal to the crystalline fusing point of PVDF. It is further preferred that the weight average molecular weight Mw of the PVDF ranges from 50 000 to 300 000 g/mol, more preferably from 80 000 to 250 000 g/mol, even more preferably from 150 000 to 250 000 g/mol as determined by GPC. Dimethyl sulfoxide can be used as an eluent and narrow polydispersity PMMA as a standard. For instance, the measurement can be performed with an instrument such as PL-GPC 220,2 $\times$ Agilent PLgel 10 $\mu$m MIXED-B, 300 $\times$ 7.5 mm (p/n PL1110-6100), flow rate 1.0 mL/min, injection volume of 100 $\mu$L, 95 °C.

The fundamental unit for PVDF is vinylidene fluoride, which is polymerized by means of a specific catalyst to give PVDF in high-purity water under controlled conditions of pressure and of temperature. Vinylidene fluoride is obtainable by way of example from hydrogen fluoride and methylchloroform as starting materials, using chlorodifluoroethane as precursor. In principle, any commercial grade of PVDF such as Kynar® grades produced by Arkema, Dyneon® grades produced by Dyneon, or Solef® grades produced by Solvay is suitable for use in the present invention. For instance, the following commercial products may be employed: Kynar® 720 (vinylidene fluoride content: 100 wt.-%, crystalline fusing point: 169 °C) and Kynar® 710 (vinylidene fluoride content: 100 wt.-%, crystalline fusing point: 169 °C) manufactured by Arkema; T850 (vinylidene fluoride content: 100 wt.-%, crystalline fusing point: 173 °C) manufactured by Kureha Corporation; Solef® 1006 (vinylidene fluoride content: 100 wt.-%, crystalline fusing point: 174 °C) and Solef® 1008 (trade name) (vinylidene fluoride content: 100 wt.-%, crystalline fusing point: 174 °C) manufactured by Solvay Solexis.

PVDF has 3 linkage modes as linkage modes of monomer: head to head linkage; tail to tail linkage; and head to tail linkage, in which the head to head linkage and the tail to tail linkage are referred to as *"hetero linkage"*. The chemical resistance of the layer A is particularly high when the *"rate of hetero linkage"* in the PVDF is not greater than 10 mol.-%. From the viewpoint of lowering the rate of hetero linkage, the PVDF is preferably a resin produced by suspension polymerization. The rate of hetero linkage can be determined from a peak of a $^{19}$F-NMR spectrum of the PVDF as specified in EP 2 756 950 A1. Typically, the fluoropolymer is not cross-linked and it therefore suitable for thermoplastic processing. The PVDF may include a flatting agent to such a degree that the transparency of the layer A is not deteriorated. As the flatting agent, an organic flatting agent and an inorganic flatting agent can be used.

In one embodiment, the fluoropolymer is a predominantly amorphous, or a microcrystalline PVDF with a haze value smaller than 5. The haze value is measured for this purpose on a pure fluoropolymer (PVDF) foil of thickness 30 $\mu$m at 23°C in accordance with ASTM D1003. Examples of types of PVDF having particularly good suitability with appropriately low haze value are Solef® 9009 from Solvay, T850 from Kureha and Kynar® 9000HD from Arkema.

Polyalkyl (meth)acrylates

Polyalkyl (meth)acrylates are usually obtained by free-radical polymerization of mixtures which typically comprise an alkyl (meth)acrylate, typically methyl methacrylate (a), and at least one further (meth)acrylate (b). These mixtures generally comprise at least 50 wt.-%, preferably at least 60 wt.-%, particularly preferably at least 80 wt.-%, and even more preferably at least 90 wt.-%, based on the weight of the monomers, of methyl methacrylate (a). The amount of methyl methacrylate (a) generally used is from 50.0 wt.-% to 99.9 wt.-%, preferably from 80.0 wt.-% to 99.0 wt.-% and particularly preferably from 90.0 wt.-% to 99.0 wt.-%, based on the weight of monomers.

These mixtures for production of polyalkyl (meth)acrylates can also comprise other (meth)acrylates (b) copolymerizable with methyl methacrylate (a). The term *"(meth)acrylate"* as used herein is meant to encompass methacrylates, acrylates and mixtures thereof. (Meth)acrylates may derive from saturated alcohols, e.g. methyl acrylate, ethyl (meth)acrylate, propyl (meth)acrylate, n-butyl (meth)acrylate, *tert*-butyl (meth)acrylate, isobutyl (meth)acrylate, pentyl (meth)acrylate and 2-ethylhexyl (meth)acrylate; or from unsaturated alcohols, e.g. oleyl (meth)acrylate, 2-propynyl (meth)acrylate, allyl (meth)acrylate, vinyl (meth)acrylate; and also aryl (meth)acrylates, such as benzyl (meth)acrylate or phenyl (meth)acrylate, cycloalkyl (meth)acrylates, such as 3-vinylcyclohexyl (meth)acrylate, bornyl (meth)acrylate; hydroxyalkyl (meth)acrylates, such as 3-hydroxypropyl (meth)acrylate, 3,4-dihydroxybutyl (meth)acrylate, 2-hydroxyethyl (meth)acrylate, 2-hydroxypropyl (meth)acrylate; glycol di(meth)acrylates, such as 1,4-butanediol (meth)acrylate, (meth)acrylates of ether alcohols, *e.g.* tetrahydrofurfuryl (meth)acrylate, vinyloxyethoxyethyl (meth)acrylate; amides and nitriles of (meth)acrylic acid etc.

The amount of the (meth)acrylic comonomers (b) generally used is from 0.1 wt.-% to 50.0 wt.-%, preferably from 1.0 wt.-% to 20.0 wt.-% and particularly preferably from 1.0 wt.-% to 10.0 wt.-%, based on the weight of monomers, and the compounds here can be used individually or in the form of a mixture.

The compositions to be polymerized can comprise not only the methyl methacrylate (a) and the (meth)acrylates (b) described above but also other unsaturated monomers which are copolymerizable with methyl methacrylate and with the abovementioned (meth)acrylates. Among these are *inter alia* 1-alkenes, such as 1-hexene, 1-heptene; branched alkenes, such as vinylcyclohexane, 3,3-dimethyl-1-propene, 3-methyl-1-diisobutylene, 4-methyl-1-pentene; acrylonitrile; vinyl esters, such as vinyl acetate; styrene, substituted styrenes having an alkyl substituent in the side chain, *e.g.* $\alpha$-methylstyrene and $\alpha$-ethylstyrene, maleic acid derivatives, such as maleic anhydride, methylmaleic anhydride, maleimide, methylmaleimide; and dienes, such as divinylbenzene.

The amount of these comonomers (c) generally used is from 0.0 wt.-% to 10.0 wt.-%, preferably from 0.0 wt.-% to 5.0 wt.-% and particularly preferably from 0.0 wt.-% to 2.0 wt.-%, based on the weight of monomers, and the compounds here can be used individually or in the form of a mixture.

Further preference is given to polyalkyl (meth)acrylates which are obtainable by polymerization of a composition having, as polymerizable constituents:

(a) from 50.0 wt.-% to 99.9 wt.-% of methyl methacrylate,
(b) from 0.1 wt.-% to 50.0 wt.-% of an acrylic acid ester of a C1-C4 alcohol,
(c) from 0.0 wt.-% to 10.0 wt.-% of monomers co-polymerizable with the monomers (a) and (b).

In yet a further embodiment, preference is given to polyalkyl (meth)acrylates composed of from 85.0 wt.-% to 99.5 wt.% of methyl methacrylate and from 0.5 wt.-% to 15.0 wt.-% of methyl acrylate, the amounts here being based on 100 wt.-% of the polymerizable constituents. Particularly advantageous copolymers are those obtainable by copolymerization of from 90.0 wt.-% to 99.5 wt.-% of methyl methacrylate and from 0.5 wt.-% to 10.0 wt.-% of methyl acrylate, where the amounts are based on 100 wt.-% of the polymerizable constituents. For instance, the polyalkyl (meth)acrylates may comprise 91.0 wt.-% of methyl methacrylate and 9.0 wt.-% of methyl acrylate, 96.0 wt.-% of methyl methacrylate and 4.0 wt.-% of methyl acrylate or 99.0 wt.-% of methyl methacrylate and 1.0 wt.-% of methyl acrylate. The Vicat softening points VSP (ISO 306:2013, method B50) of said polyalkyl (meth)acrylates is typically at least 90°C, preferably from 95 °C to 112 °C.

The weight-average molar mass Mw of the polyalkyl (meth)acrylates is generally in the range from 50 000 g/mol to 300 000 g/mol. Particularly advantageous mechanical properties are obtained from foils with polyalkyl (meth)acrylates having an average molar mass Mw in the range from 50 000 g/mol to 180 000 g/mol, preferably from 80 000 g/mol to 160 000 g/mol, in each case determined by means of GPC against PMMA calibration standards and THF as an eluent.

In a particularly preferred embodiment, the polyalkyl (meth)acrylate is obtainable by polymerization of a composition whose polymerizable constituents comprise, based on the weight of the polymerizable composition:

(a) from 80.0 wt.-% to 99.5 wt.-% of methyl methacrylate, and
(b) from 0.5 wt.-% to 20.0 wt.-% of an acrylic acid ester of a C1-C4 alcohol.

Impact modifiers

Impact modifiers for use in the present invention *per se* are well known and may have different chemical compositions and different polymer architectures. The impact modifiers may be crosslinked or thermoplastic. In addition, the impact modifiers may be in particulate form, as core-shell or as core-shell-shell particles. Typically, particulate impact modifiers have an average particle diameter between 50 nm and 1000 nm, preferably between 100 nm and 500 nm, more preferably between 100 nm and 400 nm and most preferably between 150 nm and 350 nm. *"Particulate impact modifiers"* in this context means crosslinked impact modifiers which generally have a core, core-shell, core-shell-shell or core-shell-shell-shell structure. Average particle diameter of particulate impact modifiers can be determined by a method known to a skilled person, e.g. by photon correlation spectroscopy according to the norm DIN ISO 13321:1996.

In the simplest case, the particulate impact modifiers are crosslinked particles obtained by means of emulsion polymerization whose average particle diameter is in the range from 10 nm to 150 nm, preferably from 20 nm to 100 nm, in particular, from 30 nm to 90 nm. These are generally composed of at least 20.0 wt.-%, preferably from 20.0 wt.-% to 99.0 wt.-%, particularly preferably in the range from 30.0 wt.-% to 98.0 wt.-%of butyl acrylate, and from 0.1 wt.-% to 2.0 wt.-%, preferably from 0.5 wt.-% to 1.0 wt.-% of a crosslinking monomer, e.g. a polyfunctional (meth)acrylate, *e.g.* allyl methacrylate and, if appropriate, other monomers, e.g. from 0.0 wt.-% to 10.0 wt.-%, preferably from 0.5 wt.-% to 5.0 % wt.-%, of C1-C4-alkyl methacrylates, such as ethyl acrylate or butyl methacrylate, preferably methyl acrylate, or other vinylically polymerizable monomers, e.g. styrene.

Further preferred impact modifiers are polymer particles which can have core-shell or core-shell-shell structures and are obtained by emulsion polymerization (see, for example, EP-A 0 113 924, EP-A 0 522 351, EP-A 0 465 049, EP-A 0 683 028 and US 10,040,915 B2). The present invention typically requires suitable average particle diameter of these emulsion polymers in the range from 20 nm and 500 nm, preferably between 50 nm and 450 nm, more preferably between 150 nm and 400 nm and most preferably between 200 nm and 350 nm.

A three-layer or three-phase structure with a core and two shells can prepared as follows. The innermost (hard) shell can, for example, be composed of methyl methacrylate, of small proportions of comonomers, e.g. ethyl acrylate, and of a proportion of crosslinking agent, e.g. allyl methacrylate. The middle (soft) shell can, for example, be composed of a copolymer comprising butyl acrylate and, if appropriate, styrene, while the outermost (hard) shell is the same as the matrix polymer, thus bringing about compatibility and good linkage to the matrix.

The proportion of polybutyl acrylate in the core or in the shell of the impact modifier of a two- or three-layer core-shell structure is decisive for the impact-modifying action and is preferably in the range from 20.0 wt.-% to 99.0 wt.-%, particularly preferably in the range from 30.0 wt.-% to 98.0 wt.-%, even more preferably in the range from 40.0 wt.-% to 97.0 wt.-%, based on the weight of the impact modifier. In addition to particulate impact modifiers comprising copolymers of polybutyl acrylate or polybutadiene as a soft phase, use of impact modifiers comprising siloxanes is also possible.

Thermoplastic impact modifiers have a different mechanism of action than particulate impact modifiers. They are generally mixed with the matrix material. In the case that domains are formed, as occurs, for example, in the case of use of block copolymers, preferred sizes for these domains, the size of which can be determined, for example, by electron microscopy, correspond to preferred sizes for the core-shell particles.

There are various classes of thermoplastic impact modifiers. One example thereof are aliphatic thermoplastic polyurethanes (TPUs) *e.g.* Desmopan® products commercially available from Covestro AG. For instance, the TPUs Desmopan® WDP 85784A, WDP 85092A, WDP 89085A and WDP 89051D, all of which have refractive indices between 1.490 and 1.500, are particularly suitable as impact modifiers.

A further class of thermoplastic polymers for use according in the foil of the present invention as impact modifiers are methacrylate-acrylate block copolymers, especially acrylic TPE, which comprises PMMA-poly-*n*-butyl acrylate-PMMA triblock copolymers, and which are commercially available under the Kurarity® product name by Kuraray. The poly-*n*-butyl acrylate blocks form nanodomains in the polymer matrix having a size between 10 nm and 20 nm.

In addition to thermoplastic impact modifiers described above, use of thermoplastic impact modifiers comprising PVDF is also possible. However, use of such modifiers in layers B and C is less advantageous, because they tend to impair adhesion-promoting properties of the layers.

UV absorbers and UV stabilizers

Light stabilizers are well known and are described in detail by way of example in Hans Zweifel, Plastics Additives Handbook, Hanser Verlag, 5th Edition, 2001, p. 141 ff. Light stabilizers are understood to include UV absorbers, UV stabilizers and free-radical scavengers.

UV absorbers can by way of example derive from the group of the substituted benzophenones, salicylic esters, cinnamic esters, oxanilides, benzoxazinones, hydroxyphenylbenzotriazoles, triazines or benzylidenemalonate. The best-known representatives of the UV stabilizers/free-radical scavengers are provided by the group of the sterically hindered amines (hindered amine light stabilizer, HALS).

Suitable 2-hydroxybenzophenones may include *inter alia* 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives. Suitable esters of substituted and unsubstituted benzoic acids are for example 4-*tert*-butyl-phenyl salicylate, phenyl salicylate, octylphenyl salicylate, dibenzoyl resorcinol, bis(4-*tert*-butylbenzoyl)resorcinol, benzoyl resorcinol, 2,4-di-*tert*-butylphenyl 3,5-di-*tert*-butyl-4-hydroxybenzoate, hexadecyl 3,5-di-*tert*-butyl-4-hydroxybenzoate, octadecyl 3,5-di-*tert*-butyl-4-hydroxybenzoate, 2-methyl-4,6-di-*tert*-butylphenyl 3,5-di-*tert*-butyl-4-hydroxybenzoate.

Preferably, the combination of UV absorbers and UV stabilizers is composed of the following components:

- a UV absorber of benzotriazole type,
- a UV absorber of triazine type,
- a UV stabilizer (HALS compound).

These components can be used in the form of an individual substance or in a mixture.

Benzotriazole type UV absorbers are known in the prior art and are typically 2-(2'-hydroxyphenyl)benzotriazoles. The corresponding compounds include in particular 2-(2'-hydroxy-5'-methylphenyl)-benzotriazole, 2-(3',5'-di-*tert*-butyl-2'-hydroxyphenyl)benzotriazole, 2-(5'-*tert*-butyl-2'-hydroxyphenyl)benzotriazole, 2-(2'-hydroxy-5'-(1,1,3,3-tetramethylbutyl)phenyl)benzotriazole, 2-(3',5'-di-*tert*-butyl-2'-hydroxyphenyl)-5-chloro-benzotriazole, 2-(3'-*tert*-butyl-2'-hydroxy-5'-methylphenyl)-5-chloro-benzotriazole, 2-(3'-*sec*-butyl-5'-*tert*-butyl-2'-hydroxyphenyl)benzotriazole, 2-(2'-hydroxy-4'-octyloxyphenyl)benzotriazole, 2-(3',5'-di-*tert*-amyl-2'-hydroxyphenyl)benzotriazole, 2-(3',5'-bis-($\alpha,\alpha$-dimethylbenzyl)-2'-hydroxyphenyl)benzotriazole, 2-(3'-*tert*-butyl-2'-hydroxy-5'-(2-octyloxycarbonylethyl)phenyl)-5-chloro-benzotriazole, 2-(3'-*tert*-butyl-5'-[2-(2-ethylhexyloxy)-carbonylethyl]-2'-hydroxyphenyl)-5-chloro-benzotriazole, 2-(3'-*tert*-butyl-2'-hydroxy-5'-(2-methoxycarbonylethyl)phenyl)-5-chloro-benzotriazole, 2-(3'-*tert*-butyl-2'-hydroxy-5'-(2-met*H*oxycarbonylethyl)phenyl)benzotriazole, 2-(3'-*tert*-butyl-2'-hydroxy-5'-(2-octyloxycarbonyl-ethyl)phenyl)benzotriazole, 2-(3'-*tert*-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-*tert*-butyl-2'-hydroxy-5'-(2-isooctyloxy-carbonylethyl)phenylbenzotriazole, 2,2'-methylene-bis[4-(1,1,3,3-tetramethylbutyl)-6-benzotriazole-2-ylphenol]; the transesterification product of 2-[3'-*tert*-butyl-5'-(2-methoxycarbonylethyl)-2'-hydroxyphenyl]-2*H*-benzotriazole with polyethylene glycol 300; [R-CH$_2$CH$_2$-COO-CH$_2$CH$_2$- , where R = 3'-*tert*-butyl-4'-hydroxy-5'-2*H*-benzotriazol-2-ylphenyl, 2-[2'-hydroxy-3'-($\alpha,\alpha$-dimethylbenzyl)-5'-(1,1,3,3-tetramethylbutyl)-phenyl]-benzotriazole; 2-[2'-hydroxy-3'-(1,1,3,3-tetramethylbutyl)-5'-($\alpha,\alpha$-dimethylbenzyl)-phenyl]benzotriazole. Further examples of UV absorbers of benzotriazole type that can be used are 2-(2-hydroxy-5-methylphenyl)benzotriazole, 2-[2-hydroxy-3,5-di($\alpha,\alpha$-dimethylbenzyl)phenyl]benzotriazole, 2-(2-hydroxy-3,5-di-tert-butylphenyl)benzotriazole, 2-(2-hydroxy-3,5-butyl-5-methylphenyl)-5-chlorobenzotriazole, 2-(2-hydroxy-3,5-di-*tert*-butylphenyl)-5-chlorobenzotriazole, 2-(2-hydroxy-3,5-di-*tert*-amylphenyl)benzotriazole, 2-(2-hydroxy-5-*tert*-butylphenyl)benzotriazole, 2-(2-hydroxy-3-sec-butyl-5-*tert*-butylphenyl)benzotriazole and 2-(2-hydroxy-5-*tert*-octylphenyl)benzotriazole, phenol, 2,2'-methylenebis[6-(2*H*-benzotriazol-2-yl)-4-(1,1,3,3-tetramethylbutyl)]. These compounds are commercially available from BASF SE (Ludwigshafen, Germany) e.g. as Tinuvin® 360 and Tinuvin® 234.

Benzotriazole type UV absorber may also be used in combination with other UV absorbers, for instance with a bis-maloneat type UV absorber. An example of such combination is Eusorb® BLA 4200M (commercial product comprising Tinuvin® 329 and Hostavin® B-CAP), available from Eutec Chemical Co. Ltd.

The amounts the benzotriazole type UV absorber in the layer B of are from 0.1 to 5.0 wt.-%, preferably from 0.2 to 4.0 wt.-% and very particularly preferably from 0.5 to 3.0 wt.-%, based on the weight of the acrylic-based layer B. It is also possible to use mixtures of different benzotriazole type UV absorbers.

Triazine type UV absorber are typically 2-(2-hydroxyphenyl)-1,3,5-triazines derivatives. Preferably used 2-(2-hydroxyphenyl)-1,3,5-triazines include *inter alia* 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyl-oxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)- 1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1 - oxy)-2-hydroxypropyloxy]phenyl}-4,6-bis(2,4-dimethylphenyl)-1,3,5-triazine, 2,4-bis(4-[2-ethylhexyloxy]-2-hydroxyphenyl)-6-(4-methoxyphenyl)-1,3,5-triazine. Triazine type UV absorbers such as 2-(4,6-diphenyl-1,3,5-triazin-2-yl)-5-hexyloxyphenol, can also be used. These compounds are e.g. commercially available from BASF SE (Ludwigshafen, Germany) under trademarks Tinuvin® 1600, Tinuvin® 1577 or Tinuvin® 1545.

The amounts of the triazine type UV absorber are from 0.1 to 5.0 wt.-%, preferably from 0.2 to 3.0 wt.-% and very particularly preferably from 0.5 to 2.0 wt.-%, based on the weight of the layer. It is also possible to use mixtures of different triazine type UV absorbers.

In a further preferred embodiment, the UV absorber may be an inorganic particulate material. Such material may be advantageously selected from zinc oxide, titanium dioxide, cerium dioxide, tin dioxide, iron oxides, silica or glass which may be in form of glass beads or glass powder. Examples of suitable inorganic particulate materials are for instance Solasorb™ UV100 (titanium dioxide dispersion, contains 45 wt.-% of an inorganic and organic coated titanium dioxide, average particle size 40 nm), Solasorb™ UV200 (zinc oxide dispersion, contains 60 wt.-% zinc oxide, average particle size 60 nm) available from Croda International Plc (Snaith, United Kingdom). In embodiments using glass as a UV absorber, use of glass powder or glass beads having a particle size below 10 $\mu$m is particularly advantageous in terms of efficient UV absorption and high degree of transmission of visible light. Although the choice of the glass for this purpose is not particularly limited, glass sorts such as GG395, GG400, GG420, GG435, GG475, OG515, OG 530, available from Schott AG (Mainz, Germany) showed to be particularly useful.

Sterically hindered amines, HALS (Hindered Amine Light Stabilizer) UV stabilizers are per se known. They can be used to inhibit ageing phenomena in paints and plastics, especially in polyolefin plastics (Kunststoffe, 74 (1984) 10, pp. 620-623; Farbe + Lack, Volume 96, 9/1990, pp. 689-693). The tetramethylpiperidine group present in the HALS compounds is responsible for the stabilizing effect. This class of compound can have no substitution on the piperidine nitrogen or else substitution by alkyl or acyl groups on the piperidine nitrogen. The sterically hindered amines do not absorb in the UV region. They scavenge free radicals that have been formed, whereas the UV absorbers cannot do this. Examples of HALS compounds which have stabilizing effect and which can also be used in the form of mixtures are: bis(2,2,6,6-tetramethyl-4-piperidyl) sebacate, 8-acetyl-3-dodecyl-7,7,9,9-tetramethyl-1,3,8-triazaspiro(4,5)-decane-2,5-dione, bis(2,2,6,6-tetramethyl-4-piperidyl) succinate, poly(*N*-$\beta$-hydroxyethyl-2,2,6,6-tetramethyl-4-hydroxypiperidine succinate) or bis(*N*-methyl-2,2,6,6-tetramethyl-4-piperidyl) sebacate.

The amounts used of the HALS compounds in the layer B are typically from 0.0 to 5.0 wt.-%, preferably from 0.1 to 3.0 wt.-% and very particularly preferably from 0.2 to 2.0 wt.-%, based on the weight of the layer B. It is also possible to use mixtures of different HALS compounds.

Other co-stabilizers that can be used are the HALS compounds described above, disulphites, such as sodium disulphite, and sterically hindered phenols and phosphites. Such co-stabilizers may be present in a concentration of 0.1 to 5.0 wt.%, based on the weight of the layer.

Sterically hindered phenols are particularly suitable for use in the foil of the present invention. Preferred sterically hindered phenols include *inter alia* 6-*tert*-butyl-3-methylphenyl derivatives, 2,6-di-*tert*-butyl-*p*-cresol, 2,6-*tert*-butyl-4-ethyl phenol, 2,2'-methylenebis-(4-ethyl-6-*tert*-butyl phenol), 4,4'-butylidenebis(6-*tert*-butyl-*m*-cresol), 4,4'-thiobis(6-*tert*-butyl-*m*-cresol), 4,4'-dihydroxy diphenyl cyclohexane, alkylated bisphenol, styrenated phenol, 2,6-di-*tert*-butyl-4-methyl phenol, *n*-octadecyl-3-(3',5'-di-*tert*-butyl-4'-hydroxy phenyl)propionate, 2,2'-methylenebis(4-methyl-6-*tert*-butyl phenol), 4,4'-thiobis(3-methyl-6-*tert*-butylphenyl), 4,4'-butylidenebis(3-methyl-6-*tert*-butylphenol), stearyl-$\beta$(3,5-di-4-butyl-4-hydroxy phenyl)propionate, 1,1,3-tris(2-methyl-4-hydroxy-5-*tert*-butylphenyl)butane, 1,3,5-trimethyl-2,4,6-tris(3-5-di-*tert*-butyl-4hydroxybenzyl)benzene, tetrakis-[methylene-3(3',5'-di-*tert*-butyl-4'-hydroxyphenyl)propionate]methane. Commercially available sterically hindered phenols include SUMILIZER BHT BP-76, WXR, GA-80 and BP-101 (SUMITOMO), IRGANOX® 1076, IRGANOX® 565, IRGANOX® 1035, IRGANOX® 1425WL, IRGANOX® 3114, IRGANOX® 1330 and IRGANOX® 1010 (BASF SE), MARK AO-50,-80, -30, - 20, -330 and -60 (ADEKA ARGUS), and TOMINOX SS, TT (YOSHITOMI), IONOX WSP (ICI), SANTONOX® (MONSANTO), ANTAGE CRYSTAL (KAWAGUCHI), NOCLIZER NS-6 (OUCHI SHINKO), TOPANOL® CA (ICI), CYANOX® 1790 (ACC).

Typically, the layers A, B and, if present, C may comprise:

from 0.5 to 4.0 wt.-% of a benzotriazole type compound as a first UV absorber;
from 0.5 to 3.0 wt.-% of a triazine type compound as a second UV absorber; and
from 0.2 to 2.0 wt.-% of a HALS type compound as a UV stabilizer, based on the weight of the layer B.

Adhesion-promoting copolymers

Typically, the adhesion-promoting copolymer comprises:

(i) from 50.0 to 99.5 wt.-%, preferably from 70.0 to 99.5 wt.-% methyl methacrylate
(ii) from 0.5 to 25.0 wt.-%, preferably from 0.5 to 15.0 wt.-% of an adhesion-promoting monomer; and
(iii) from 0.0 to 25.0 wt.-% of other vinyl-copolymerizable monomers having no functional groups other than the vinyl function, based on the weight of the adhesion-promoting copolymer.

The vinyl-copolymerizable monomers (iii) can be selected from a group of vinyl aromatic monomers such as $\alpha$-halogen styrene, p-methylstyrene, *p-tert*-butylstyrene, vinylnaphthalene, as well as, preferably, $\alpha$-methyl styrene and styrene, wherein styrene is particularly preferred.

The term *"adhesion-promoting monomer"* (ii) as used herein refers to a monomer having a polymerizable double bond as well as a reactive functional group capable of reacting with an amino group or a methylol group. Hence, the adhesion-promoting copolymer can chemically interact with the melamine resin of a HPL by performing heat reaction in a state of being contacted with a material containing methylol melamine and a derivative thereof, specifically, a melamine resin or a precursor thereof. The reaction temperature of the reactive functional group varies depending on the presence of a catalyst, a pH value, or the like, but is preferably 50 to 200 °C and more preferably 110 to 170 °C.

Since HPLs are produced generally at a temperature of 110 to 170 °C, when the reaction temperature is 110 to 170 °C, the adhesion-promoting copolymer chemically reacts with the melamine resin of HPLs.

Examples of reactive functional groups with respect to an amino group or methylol group include but are not limited to a hydroxyl group, a carboxyl group, an amino group, an amide group, an acid anhydride group, an imide group, and an epoxy group, wherein acid anhydride group and carboxyl group are particularly useful. Accordingly, adhesion-promoting monomers which are particularly suitable for use in the present invention include but are not limited to unsaturated carboxylic anhydrides, unsaturated dicarboxylic anhydrides and unsaturated dicarboxylic imides. Use of maleic acid anhydride, methacrylic acid anhydride, methacrylic acid, maleic acid anhydride or itaconic acid anhydride, *N*-phenylmaleimide, and *N*-cyclohexylmaleimide showed to lead to particularly advantageous adhesion-promoting properties. It is particularly advantageous to use those selected from the group consisting of GMA (glycidyl methacrylate), maleic acid derivatives, such as maleic acid, maleic acid anhydride (MA), methylmaleic anhydride, maleimide, methylmaleimide, maleamides (MAs), phenylmaleimide and cyclohexylmaleimide, fumaric acid derivatives, methacrylic anhydride, acrylic anhydride. Most promising results were observed with maleic acid anhydride and methacrylic acid anhydride.

In a preferred embodiment, the adhesion-promoting copolymer comprises:

(i) from 50.0 to 95.0 wt.-%, preferably 60.0 to 90.0 wt.-%, more preferably from 70.0 to 85.0 wt.-%, even more preferably 70 to 80 wt.-% methyl methacrylate;
(ii) from 0.2 to 25.0 wt.-%, preferably from 0.5 to 20.0 wt.-%, more preferably from 1.0 to 15.0 wt.-% and even more preferably 5.0 to 12.0 wt.-% maleic anhydride; and
(iii) from 0.0 to 25.0 wt.-%, preferably from 2.0 to 15.0 wt.-% of other vinyl-copolymerizable monomers having no functional groups other than the vinyl function, based on the weight of the copolymer.

In a most preferred embodiment, the adhesion-promoting copolymer is a copolymer of MMA, styrene and maleic anhydride.

Depending on the substrate to be protected, the adhesion promoter, in particular the adhesion-promoting copolymer may be located in a separate adhesion-promoting layer C rather than in the acrylic-based layer B (cf. Figure 2). In this embodiment, the layer C with an adhesion-promoting copolymer comprises

(i) from 50.0 to 95.0 wt.-%, preferably 60.0 to 90.0 wt.-%, more preferably from 70.0 to 85.0 wt.-%, even more preferably 70 to 80 wt.-% methyl methacrylate;
(ii) from 0.2 to 25.0 wt.-%, preferably from 0.5 to 20.0 wt.-%, more preferably from 1.0 to 15.0 wt.-% and even more preferably 5.0 to 12.0 wt.-% maleic anhydride; and
(iii) from 0.0 to 25.0 wt.-%, preferably from 2.0 to 15.0 wt.-% of other vinyl-copolymerizable monomers having no functional groups other than the vinyl function, based on the weight of the copolymer.

Typically, if the layer C is present, the order of layers in the foil of the present invention, is as follows: A-B-C. In a most preferred embodiment, the foil of the present invention consists of the layers A, B and C located in this order in respect to each other.

Silica particles

In some embodiments, the layer B or C comprise particulate silica and therefore have a surprisingly high adhesion to materials such as melamine resin-based HPLs. Therefore, the multilayer foil of the present invention can be directly used for lamination of various substrates such as HPLs by applying the foil with layer B or C facing the substrate. Importantly, the presence of adhesion - promoting copolymers as described above is no longer essential in this embodiment.

To achieve an optimal balance between good handling properties of the multilayer foil and good adhesive properties of the layer B or C it showed to be advantageous to ensure that the content, in wt.-%, of one or several impact modifiers $n_{im}$ obeys the following relationship:

$$0.01 * n_{im} \leq n_{si} \leq 0.4 * n_{im}$$

$n_{si}$ being the content, in wt.-%, of particulate silica in the layer.

If the content of particulate silica $n_{si}$ in the layer is lower than $0.01 * n_{im}$ the multilayer foil, in principle, still will be suitable for the desired purposes. However, adhesion of various liquid coatings to the layer and adhesion of the layer to some substrates may become diminished to some extent.

On the other hand, if the content of particulate silica $n_{si}$ in the layer is higher than $0.4 * n_{im}$ brittleness of the layer will increase. Consequently, the multilayer foil of the present invention will be more difficult to handle.

Furthermore, for the sake of achieving an even better balance between adhesion properties of the layer and its brittleness it is particularly advantageous that the content, in wt.-%, of one or several impact modifiers $n_{im}$ in the layer obeys the following relationship:

$$0.03^*n_{im} \leq n_{si} \leq 0.3^*n_{im}$$

wherein it is particularly advantageous that the content, in wt.-%, of one or several impact modifiers $n_{im}$ in the layer obeys the following relationship:

$$0.05^*n_{im} \leq n_{si} \leq 0.2^*n_{im}$$

$n_{si}$ being the content, in wt.-%, of particulate silica in the layer.

The choice of particulate silica for use in the present invention is not particularly limited and pyrogenic and precipitated silicas may be used. Nonetheless, it showed to be advantageous in terms of adhesion-promoting properties to select particulate silica having a specific surface area, measured by BET method, norm ISO 9277, of more than 200 $m^2$/g, preferably more than 300 $m^2$/g, more preferably more than 400 $m^2$/g, even more preferably more than 500 $m^2$/g. Still, the specific surface area of particulate silica is preferably not higher than 850 $m^2$/g.

In a preferred embodiment, the silica particles have a weight-average particle diameter $d_{50}$ ranging between 1.0 $\mu$m and 20.0 $\mu$m, more preferably between 2.0 $\mu$m and 15.0 $\mu$m. The weight-average particle diameter $d_{50}$ can be determined by a method known to a skilled person, e.g. by laser diffraction method according to the norm DIN ISO 13320 upon using a commercially available instrument such as LS 13 320 Laser Diffraction Particle Size Analyzer from Beckman Coulter Inc.

Preferably, silica particles show a 45 $\mu$m screen residue of not more than 0.1 wt.-%, *i.e.* substantially no agglomerates with a particle size larger than 45 $\mu$m are present. This allows silica particles to be distributed in the matrix of poly(meth)acrylate foil in a particularly homogeneous manner without large filler agglomerates being present so that the resulting foil shows a substantially uniform appearance and has excellent mechanical properties. Presence of substantial amounts of larger agglomerates of silica particles in the layer is disadvantageous, since such agglomerates tend to initiate foil cracks thereby reducing the initial tear strength at a random position of the foil.

Particulate silica for use in the present invention typically has a $SiO_2$ content, based on ISO 3262-19, of not less than 95 wt.-%, more preferably not less than 96 wt.-%, even more preferably not less than 97 wt.-%.

Use of precipitated silica, as for example described in Ullmann's Encyclopaedia of Industrial Chemistry, 5th edition, vol. A23, p. 642-647, is particularly preferred. Precipitated silica may have specific surface areas, measured by BET method, up to 850 $m^2$/g and is obtained by reaction of at least one silicate, preferably of an alkali metal silicate and/or alkaline earth metal silicate, with at least one acidifying agent, preferably at least one mineral acid. In contrast to silica gels (see Ullmann's Encyclopaedia of Industrial Chemistry, 5th edition, vol. A23, p. 629-635), precipitated silicas do not consist of a homogeneous three-dimensional $SiO_2$ network, but of individual aggregates and agglomerates. A particular feature of precipitated silica is the high proportion of so-called internal surface area, which is reflected in a very porous structure with micro- and mesopores.

Precipitated silicas differ from fumed silicas, which are also known as AEROSIL® (see Ullmann's Encyclopaedia of Industrial Chemistry, 5th edition, vol. A23, p. 635-642). Fumed silicas are obtained by means of flame hydrolysis from silicon tetrachloride. Owing to the completely different preparation process, fumed silicas, among other properties, have different surface properties from precipitated silicas. This is expressed, for example, in the lower number of silanol groups on the surface. Moreover, the production of fumed silicas does not give rise to any polyvalent anions.

Precipitated silicas for use in the present invention include *inter alia* SIPERNAT® 160, SIPERNAT® 310, SIPERNAT® 320, SIPERNAT® 320DS, SIPERNAT® 325C, SIPERNAT® 350, SIPERNAT® 360, SIPERNAT® 383DS, SIPERNAT® 500 LS, SIPERNAT® 570, SIPERNAT® 700, SIPERNAT® 22, SIPERNAT® 22S, SIPERNAT® 50LOS, SIPERNAT® 22 , Tixosil® 38, Tixosil® 38A, Tixosil® 38D, Tixosil® 38D, Tixosil® 38X, Tixosil® 38AB, Tixosil® 39, Tixosil® 43, Tixosil® 331, Tixosil® 365, Zeoosil® 175BB, Zeosil® 39, Zeosil® 39AB, Zeosil® 45, Flo-Gard™ FF 320, Flo-Gard™ FF 330, Flo-Gard™ FF 350, Flo-Gard™ FF 370, Flo-Gard™ FF 390, Flo-Gard™ SP, Flo-Gard™ SP-D, Hi-Sil™ 213, Hi-Sil™ ABS, Hi-Sil™ HOA, Hi-Sil™ HOA-D, Hi-Sil™ SC 50-D, Hi-Sil™ 60-M, Hi-Sil™ 72, Hi-Sil™ T-600, Hi-Sil™ T650, Hi-Sil™ 700 , Hubersil® 5170, Hubersorb® 250, Hubersorb® 250 NF, Hubersorb® 5121, Hubersorb® 600, Hubersorb® E, ZEOFREE® 110 SD, ZEOFREE®® 153, ZEOFREE® 153 B, ZEOFREE® 182, ZEOFREE® 51, ZEOFREE® 5111, ZEOFREE® 5112, ZEOFREE® 5161, ZEOFREE® 5161A, ZEOFREE® 5161 S, ZEOFREE® 5175B, ZEOFREE® 5181, ZEOFREE® 5183, ZEOFREE® 80, ZEOFREE® 684.

Nonetheless, fumed or pyrogenic silicas may also be used. Suitable AEROSIL® types from Evonik Industries AG are e.g. AEROSIL® 90, AEROSIL® 130, AEROSIL® 150, AEROSIL® 200, AEROSIL® 300, AEROSIL® 380, AEROSIL® Ox 50 but Cab-O-Sil® M5, Cab-O-Sil® EH5, Cab-O-Sil® S 17, HDK T40, HDK N20, HDK N20E can also be used.

**Properties of the foil**

Depending on the envisaged purpose, the foil of the present invention may have a total thickness between 1.0 $\mu$m and 300.0 $\mu$m, more preferably between 1.0 $\mu$m and 200.0 $\mu$m, yet even more preferably between 5.0 $\mu$m and 100.0 $\mu$m.

As already outlined above, the foil of the present invention has excellent mechanical properties. In particular, the elongation at break of the foil, measured by a common method such as the one described in the norm ISO 527-3 (2003) is at least 50%, preferably at least 60%, even more preferably at least 70%.

The total thickness of the foil of the present invention can be determined by mechanical scanning according to the norm ISO 4593-1993. Additionally, the thickness of the foil of the present invention and of its individual layers can be determined using a scanning electron microscope. For this purpose, the foil samples can be frozen in liquid nitrogen, mechanically broken and the freshly obtained surfaces are analysed.

The layer A typically has a thickness from 1.0 $\mu$m to 30.0 $\mu$m, preferably from 5.0 $\mu$m to 20.0 $\mu$m.

The layer B usually has a thickness between 10.0 $\mu$m and 200.0 $\mu$m, preferably between 15.0 $\mu$m and 150.0 $\mu$m.

The adhesion-promoting layer C, if present, usually has a thickness from 1.0 $\mu$m to 30.0 $\mu$m, preferably from 2.0 $\mu$m to 20.0 $\mu$m.

Due to presence of protruding filler particles in the layer A, the outer surface of the layer A of the multilayer foil typically has a roughness value Rz to DIN 4768 of at least 0.7 $\mu$m, preferably from 1.0 to 50.0 $\mu$m, more preferably from 2.0 to 40.0 $\mu$m, even more preferably from 5.0 to 30.0 $\mu$m. The roughness measurements can be carried out using a commercially available instrument such as Form Talysurf 50 produced by Rank Taylor Hobson GmbH.

The gloss (R 60°) of the outer surface of the layer A to DIN 67530 (01/1982) is usually at most 40, preferably at most 30, in particular from 15 to 30. The samples were therefore measured with water between the underground and layer B, to ensure an optical connection between these two surfaces. The gloss measurements can be carried out using an RL laboratory reflectometer such as a reflectometer of Fa. Dr. Hach-Lange.

Typically, the foil of the present invention has a luminous transmittance ($D_{65}$) of more than 60%, preferably more than 70%, more preferably more than 80% for each wavelength from 400 nm to 800 nm, measured according to norm DIN EN ISO 13468-2 (2006). While measuring the transmittance and reflectance values from 250 nm to 2500 nm according to norm DIN EN ISO 13468-2 (2006) a TSR of the films can be calculated as described in the norm ASTM E903-96 using the standard procedure for solar absorption, reflection and transmission (Solar spectrum according to ASTM G 173-03 (2012)) of materials using an integrating sphere.

Process for the manufacturing of the foil

Depending on the intended application, the foil of the present invention can be produced at any desired thickness. A surprising factor here is a particularly high IR reflectance and mechanical stability as well as very high weathering and mechanical protection provided to the substrate. However, for the purposes of the invention preference is given to relatively thin foils, characterized by a thickness in the range from 10.0 to 200.0 $\mu$m, preferably in the range from 40.0 to 120.0 $\mu$m, particularly preferably in the range from 50.0 to 90.0 $\mu$m.

The mixtures of individual components of the layers A, B and, if present, C can be prepared via dry blending of the components, which are in pulverulent, granular, or preferably pelletized, form. Such mixtures may also be processed via melting and mixing of the individual components in the molten state or via melting of dry premixes of the individual components to give a ready-to-use moulding composition. By way of example, this may take place in single- or twin-screw extruders. The resultant extrudate may then be pelletized. Conventional additives, auxiliaries and/or fillers may be admixed directly or added subsequently by the final user as required. Furthermore, in order to minimize breakage of the platelet-shaped filler particles and optimize their parallel orientation in the foil, it is preferred that the moulding composition forming the layer A is prepared by addition of the platelet-shaped filler particles to molten material of the layer A.

The multilayer foil of the present invention can then produced by methods known per se, examples being co-extrusion or lamination or by extrusion lamination.

One particular production variant relates to a process comprising a step in which the foil of the present invention is moulded in a foil-moulding process, preferably in chill-roll process.

Application of the foil onto a substrate

The inventive foils have a broad range of applications. One preferred use of the foils is coating of plastics mouldings. Here, it is particularly advantageous to coat plastics mouldings which comprise PVC, or are composed of PVC. The protected substrate is advantageously by way of example a window profile composed of aluminium, of wood, of plastic or of a composite material, may bear a decorative foil, preferably composed of PVC. This article is then protected from weathering by using the inventive foil. Another preferred use of the inventive foil is design of a high-specification, durable surface finish for substrate materials.

Generally speaking, use of the IR reflective foil of the present invention is particularly advantageous, when the substrate has a dark colour i.e. a L*-value lower than 60, preferably lower than 50, more preferably lower than 40, even more preferably lower than 30 (CIELAB 1976 ($D_{65}$, 10°) determined according to the standard DIN 6174). This allows obtaining multi-layer articles having significantly higher TSR value in comparison to the articles without the foil.

As will be readily appreciated by skilled person, the foil of the present invention is applied to a substrate in such a way that the layer A forms the outer surface of the coated substrate. In other words, if the foil of the present invention substantially consists of layers A and B, the layer B is located between the layer A and the substrate. In embodiments, in which the foil of the present invention further comprises the layer C, the layer C is located between the layer B and the surface of the coated substrate.

Hence, a further aspect of the present invention is a process for the manufacturing of a coated article, comprising a step of applying a foil onto the surface of said substrate.

Application of the inventive foil onto a substrate is in all cases relatively simple. The foil is preferably applied by means of co-extrusion to the substrate to be protected. Application of the foil by means of foil lamination to the material to be protected is also possible. Preference is also given to a use which is characterized in that the foil is applied by means of extrusion lamination to the material to be protected. Preferably, extrusion lamination is carried out at a temperature greater than or equal to 120°C and upon application of a mechanical pressure greater than or equal to 1 MPa, preferably greater than or equal to 2 MPa, more preferably greater than or equal to 4 MPa, more preferably greater than or equal to 6 MPa, more preferably greater than or equal to 7 MPa.

In one embodiment of the present invention, the article itself may be a foil or a sheet, which can be conveniently stored and/or handled in form of a roll.

In preferred embodiments the coated article of the present invention may be a high-pressure laminate (HPL), a medium pressure laminate (MPL) or a continuous pressure laminate (CPL). Hence, one aspect of the present invention relates to a process for the manufacturing of a high-pressure laminate using the foil as described above. In a particularly preferred embodiment, multi-layer materials obtainable using the foil of the invention are decorative high-pressure laminates (HPLs) according to norms EN 438-2 and EN 438-6, which are composed of layers of webs of fibrous material (e.g. paper), impregnated with curable resins, these being bonded to one another by means of the high-pressure process described below. The surface layer of the material, one or both sides of which have decorative colours or patterns, is impregnated with resins based on amino plastics, e.g. melamine resins. The amino or methylolamino groups present in the decorative layer during the high-pressure process then serve as reaction partners for covalent bonding to the polymethacrylate layer (in this case foils) for surface finishing. The corresponding high-pressure laminates are described *inter alia* in US 2017/0197391 A1.

Preparation of HPL is typically carried out batchwise, at a pressure of from 1 MPa to 20 MPa, preferably of from 4 MPa to 15 MPa, more preferably from 6 MPa to 10 MPa and a temperature of from 120 °C to 220 °C.

The high-pressure process produces a long-lasting bond between the decorative layer and the polymethacrylate layer applied according to the invention. The temperature set during the process and the associated interpenetration of the melamine-resin-saturated decorative paper into the foil ensures sufficient formation of covalent bonds and therefore long-lasting bonding to the material.

The high-pressure process is defined as simultaneous use of heat (temperature greater than or equal to 120 °C) and high pressure (greater than or equal to 3 MPa), the result being that the curable resins flow and then harden to produce a homogeneous non-porous material of relatively high density (at least 1.35 g/cm$^3$) having the required surface structure. The high-pressure process can be carried out batch-wise or as a roll-to-roll process i.e. continuously. The product of the later one is usually called continuous pressure laminate (CPL).

The method for the manufacturing of CPLs comprises providing curable resin-based support, e.g. a phenolic resin-based support structure or a melamine resin-based support structure. The support structure can comprise several individual layers which are typically paper layers. The paper layers can be available as cardboard layers. One or all of these layers preferably comprise the phenolic resin or the melamine resin. The support structure usually has a thickness from 0.1 mm to 2 mm, further preferably from 0.2 mm to 1.5 mm, further preferably from 0.3 mm to 1.2 mm, further preferably from 0.4 mm to 1.0 mm, and further preferably from 0.5 mm to 0.8 mm. The CPL process involves pressing the multilayer foil of the present invention with the support structure. The time with which the material is subjected to pressure and temperature is normally significantly shorter than with the HPL batch process. In a CPL process the layers can be pressed in a continuous process into a kind of endless plate, by using e.g. a double-sided heated double-belt press. The double-belt press can comprise structural belts (*i.e.* belts with structured/embossed surface). The pressing pressure can be lower than in the production of HPLs. Preferably, pressing is carried out in the CPL process at a pressure of 1.0 MPa to 10 MPa, further preferably from 1.5 MPa to 8.0 MPa, further preferably from 2.0 MPa to 6.0 MPa, further preferably from 2.5 MPa to 4.5 MPa and most preferably from 3.0 MPa to 3.5 MPa. The temperature during this step is usually kept between 120 °C and 200 °C, further preferably between 140 °C and 180 °C, further preferably between 150 °C to 170 °C.

SEM Images

SEM images were obtained using a scanning electron microscope JEOL JSM-IT300, commercially obtainable from JEOL Ltd.

The measurement parameters were as follows:

| | |
|---|---|
| Variable flow of electrons from a tungsten filament (cathode) | |
| Vacuum system: | Rotary pump / oil diffusion pump |
| X-Y-Z-rotation-tilt: | totally motorized |
| Working distance (WD): | 5 to 70 mm (common: 10 mm) |
| Sample rotation: | 360° |
| Sample tilting: | - 5 to max. 90° (depending on WD) |
| Magnification: | 10x to 300 000x |
| Maximum resolution: | ~ 3 nm |
| Detectors: | Secondary Electrons (SE) |
| | Back Scattered Electrons (BSE, 5 segments) |
| | Energy dispersive X-Ray Analysis (EDS) |

Sample preparation

For the measurement of foil thickness, the samples were frozen using liquid nitrogen and mechanically broken. For this purpose, a brittle fracture was performed. The obtained fracture surface was analysed.

Electrically conductive layer

All standard preparations were sputtered with gold to obtain an electrically conductive surface.

Measurements in the image

The average thickness of the foil and the average thickness of individual layers were measured in the SEM image. To enable subsequent measurements of existing images all images as well as the relevant measurement parameters were stored in a SEM image database.

The following examples will illustrate the present invention in a greater detail without being limiting.

**Examples**

The foils were produced by adapter extrusion and co-extrusion using chill-roll process at 240-250 °C (melt temperature in the extrusion die) at extrusion speed 7.3 m/min using a 35 mm-diameter single screw extruder and a 25 mm-diameter single screw co-extruder. Alternatively, production can be achieved by way of a multiple-manifold co-extrusion process or a combination of adapter and multiple-manifold co-extrusion.

As platelet-shaped filler particles a mica-based infrared reflective pigment coated with $TiO_2$ (rutile), $ZrO_2$ and $SnO_2$ having a particle size (laser diffraction measurement) of 10 - 60 $\mu$m, available from Merck KGaA, Darmstadt was used.

PMMA used in examples below was a copolymer of 96 wt.-% methyl methacrylate and 4 wt.-% methyl acrylate with mass average molecular weight Mw of 155 000 g/mol (determined by means of GPC against a PMMA standard), available from Rohm GmbH, Darmstadt.

PVDF used in examples was KF Polymer T 850, available from Kureha GmbH, Düsseldorf.

Impact modifier mentioned in examples below was a butyl acrylate-based acrylic core-shell impact modifier.

Tinuvin® 360 ((phenol-2,2'-methylene-bis(6-(2H-benzotriazol-2-yl)-4-(1,1,3,3-tetramethylbutyl))), benzotriazole type UV absorber) and Tinuvin® 1600 ((6-[4,6-bis(4-phenylphenyl)-1,2-dihydro-1,3,5-triazin-2-ylidene]-3-[(2-ethylhexyl)oxy]cyclohexa-2,4-dien-1-one), triazine type UV absorber) are commercially available from BASF SE, Ludwigshafen.

Sabo®stab UV 119 (1,3,5-triazine-2,4,6-triamine, *N*2,*N*2"-1,2-ethanediylbis[*N*2-[3-[[4,6-bis[butyl(1,2,2,6,6-pentamethyl-4-piperidinyl)amino]-1,3,5-triazin-2-yl]amino]propyl]-*N'*,*N"*-dibutyl-*N'*,*N"*-bis(1,2,2,6,6-pentamethyl-4-piperidinyl), hindered amine light stabilizer (HALS)) is available from Sabo S.p.A, Levate, Italy.

**Production Example 1** (comparative)

A PMMA monolayer foil having a total thickness of 53 μm was prepared by extrusion at 240 - 250 °C (melt temperature) at extrusion speed 7.3 m/min using a 35 mm-diameter single screw extruder.
The monolayer foil had the following composition:

a) 85.5 wt.-% of core-shell impact modifier,
b) 12.5 wt.-% of PMMA,
c) 1.0 wt.-% of Tinuvin® 360,
d) 0.7 wt.-% of Tinuvin® 1600,
e) 0.3 wt.-% of Sabo®stab UV 119.

The monolayer foil contained no platelet-shaped particulate filler.

**Production Example 2** (comparative)

A PMMA monolayer foil having a total thickness of 53 μm was prepared by extrusion at 240 - 250 °C (melt temperature) at extrusion speed 7.3 m/min using a 35 mm-diameter single screw extruder.
The monolayer foil had the following composition:

a) 81.1 wt.-% of core-shell impact modifier,
b) 11.9 wt.-% of PMMA,
c) 1.0 wt.-% of Tinuvin® 360,
d) 0.7 wt.-% of Tinuvin® 1600,
e) 0.3 wt.-% of Sabo®stab UV 119,
f) 5.0 wt.-% of platelet-shaped particulate filler.

The monolayer foil contained 5.00 wt.-% of platelet-shaped particulate filler, based on the total weight of the foil.

**Production Example 3** (comparative)

A PMMA monolayer foil having a total thickness of 53 μm was prepared by extrusion at 240 - 250 °C (melt temperature) at extrusion speed 7.3 m/min using a 35 mm-diameter single screw extruder.
The monolayer foil had the following composition:

a) 83.8 wt.-% of core-shell impact modifier,
b) 12,2 wt.-% of PMMA,
c) 1.0 wt.-% of Tinuvin® 360,
d) 0.7 wt.-% of Tinuvin® 1600,
e) 0.3 wt.-% of Sabo®stab UV 119,
f) 2.0 wt.-% of platelet-shaped particulate filler.

The monolayer foil contained 2.00 wt.-% of platelet-shaped particulate filler, based on the total weight of the foil.

**Production Example 4** (comparative)

A PMMA monolayer foil having a total thickness of 53 μm was prepared by extrusion at 240 - 250 °C (melt temperature) at extrusion speed 7.3 m/min using a 35 mm-diameter single screw extruder.
The monolayer foil had the following composition:

a) 84.6 wt.-% of core-shell impact modifier,
b) 12.4 wt.-% of PMMA,
c) 1.0 wt.-% of Tinuvin® 360,

d) 0.7 wt.-% of Tinuvin® 1600,
e) 0.3 wt-% of Sabo®stab UV 119,
f) 1.0 wt.-% of platelet-shaped particulate filler.

The monolayer foil contained 1.00 wt.-% of platelet-shaped particulate filler, based on the total weight of the foil.

**Production Example 5** (comparative)

A bilayer foil consisting of a PMMA and PVDF layer having a total thickness of 53 μm was prepared by extrusion at 240 - 250 °C (melt temperature) at extrusion speed 7.3 m/min using a 35 mm-diameter single screw extruder and a 25 mm-diameter single screw co-extruder.
The layer A had a thickness of 5 μm and the following composition:

a) 100.0 wt.-% of PVDF

The layer B had a thickness of 48 μm and the following composition:

a) 81.1 wt.-% of core-shell impact modifier,
b) 11.9 wt.-% of PMMA,
c) 1.0 wt.-% of Tinuvin® 360,
d) 0.7 wt.-% of Tinuvin® 1600,
e) 0.3 wt.-% of Sabo®stab UV 119,
f) 5.0 wt.-% of platelet-shaped particulate filler.

The bilayer foil contained 4.50 wt.-% of platelet-shaped particulate filler, based on the total weight of the foil.

**Production Example 6** (comparative)

A bilayer foil consisting of a PMMA and PVDF layer having a thickness of 53 μm was prepared by co-extrusion under the same conditions as in Example 3.
The layer A had a thickness of 5 μm and the following composition:

a) 100.0 wt.-% of PVDF

The layer B had a thickness of 48 μm and the following composition:

a) 83.8 wt.-% of core-shell impact modifier,
b) 12.2 wt.-% of PMMA,
c) 1.0 wt.-% of Tinuvin® 360,
d) 0.7 wt.-% of Tinuvin® 1600,
e) 0.3 wt.-% of Sabo®stab UV 119,
f) 2.0 wt.-% of platelet-shaped particulate filler.

The bilayer foil contained 1.80 wt.-% of platelet-shaped particulate filler, based on the total weight of the foil.

**Production Example 7** (comparative)

A bilayer foil consisting of a PMMA and PVDF layer having a thickness of 53 μm was prepared by co-extrusion under the same conditions as in Example 3.
The layer A had a thickness of 5 μm and the following composition:

a) 100.0 wt.-% of PVDF

The layer B had a thickness of 48 μm and the following composition:

a) 84.6 wt.-% of core-shell impact modifier,
b) 12.4 wt.-% of PMMA,
c) 1.0 wt.-% of Tinuvin® 360,

d) 0.7 wt.-% of Tinuvin® 1600,
e) 0.3 wt.-% of Sabo®stab UV 119,
f) 1.0 wt.-% of platelet-shaped particulate filler.

The bilayer foil contained 0.90 wt.-% of platelet-shaped particulate filler, based on the total weight of the foil.

**Production Example 8** (inventive)

A bilayer foil consisting of a PMMA and PVDF layer having a thickness of 53 μm was prepared by co-extrusion under the same conditions as in Example 3.
The layer A had a thickness of 5 μm and the following composition:

a) 90.0 wt.-% of PVDF
b) 10.0 wt.-% of platelet-shaped particulate filler.

The layer B had a thickness of 48 μm and the following composition:

a) 85.5 wt.-% of core-shell impact modifier,
b) 12.5 wt.-% of PMMA,
c) 1.0 wt.-% of Tinuvin® 360,
d) 0.7 wt.-% of Tinuvin® 1600,
e) 0.3 wt.-% of Sabo®stab UV 119.

The bilayer foil contained 1.00 wt.-% of platelet-shaped particulate filler, based on the total weight of the foil.

**Production Example 9** (inventive)

A bilayer foil consisting of a PMMA and PVDF layer having a thickness of 53 μm was prepared by co-extrusion under the same conditions as in Example 3.
The layer A had a thickness of 5 μm and the following composition:

a) 95.0 wt.-% of PVDF
b) 5.0 wt.-% of platelet-shaped particulate filler.

The layer B had a thickness of 48 μm and the following composition:

a) 85.5 wt.-% of core-shell impact modifier,
b) 12.5 wt.-% of PMMA,
c) 1.0 wt.-% of Tinuvin® 360,
d) 0.7 wt.-% of Tinuvin® 1600,
e) 0.3 wt.-% of Sabo®stab UV 119.

The bilayer foil contained 0.50 wt.-% of platelet-shaped particulate filler, based on the total weight of the foil.

**Production Example 10** (inventive)

A bilayer foil consisting of a PMMA and PVDF layer having a thickness of 53 μm was prepared by co-extrusion under the same conditions as in Example 3.
The layer A had a thickness of 5 μm and the following composition:

a) 98.0 wt.-% KF of PVDF
b) 2.0 wt.-% of platelet-shaped particulate filler.

The layer B had a thickness of 48 μm and the following composition:

a) 85.5 wt.-% of core-shell impact modifier,
b) 12.5 wt.-% of PMMA,
c) 1.0 wt.-% of Tinuvin® 360,

d) 0.7 wt.-% of Tinuvin® 1600,
e) 0.3 wt-% of Sabo®stab UV 119.

The bilayer foil contained 0.20 wt.-% of platelet-shaped particulate filler, based on the total weight of the foil.

Optical properties

Transmittance and reflectance values of all samples were measured at the wavelength from 250 nm to 2500 nm according to norm DIN EN ISO 13468-2 (2006). A TSR values of the acrylic foils of Production Examples 1-10, PVC foils and laminates are then calculated as described in the norm ASTM E 903-96 using the standard procedure for solar absorption, reflection and transmission (Solar spectrum according to ASTM G 173-03 (2012)) of materials using an integrating sphere.

TSR values of the acrylic foils of Production Examples 1-10 are summarised in Table 1.

**Table 1.** TSR of the production examples

| Production Example | Content of platelet-shaped particles, wt.-% | TSR % |
|---|---|---|
| 1 | 0.00% | 7.2 |
| 10* | 0.20% | 8.6 |
| 9* | 0.50% | 9.7 |
| 7 | 0.90% | 9.5 |
| 4 | 1.00% | 10.6 |
| 8* | 1.00% | 12.1 |
| 6 | 1.80% | 12.4 |
| 3 | 2.00% | 13.7 |
| 5 | 4.50% | 19.8 |
| 2 | 5.00% | 20.8 |
| * inventive Example | | |

As expected, TSR values of all foils generally increase with the total content of platelet-shaped particles. However, the foils of the present invention have a significantly higher TSR value in comparison to those of Production Examples 1-7 at a given total content of platelet-shaped particles. For instance, the foil of Production Example 9 (inventive) has a higher TSR value than the foil of Production Example 7 (non-inventive), despite the foil of Production Example 9 has a lower content of platelet-shaped particles.

Furthermore, the foil of Production Example 4 (non-inventive) has the same content of platelet-shaped particles as the foil of Production Example 8 (inventive), namely 1.00 wt.-%. Nevertheless, the foil of Production Example 8 (inventive) has a significantly higher TSR value, namely 12.1%.

Gloss

The gloss of the outer surface of the layer A to DIN 67530 (01/1982) of all samples was measured with water between the underground and layer B, to ensure an optical connection between these two surfaces. RL laboratory reflectometer of Fa. Dr. Hach-Lange was used.

The gloss values of the samples are shown in Table 2.

**Table 2** Gloss of foils of Production Examples measured with a water between layer B and underground

| Production Example | Content of platelet-shaped particles, wt.-% | R(20°) [GU] | R(60°) [GU] | R(85°) [GU] |
|---|---|---|---|---|
| 1 (monolayer foil) | 0.00% | 25 | 100.0 | 140.0 |
| 2 (monolayer foil) | 5.00% | 3.0 | 17.4 | 18.1 |

(continued)

| Production Example | Content of platelet-shaped particles, wt.-% | R(20°) [GU] | R(60°) [GU] | R(85°) [GU] |
|---|---|---|---|---|
| 3 (monolayer foil) | 2.00% | 9.1 | 36.9 | 43.3 |
| 4 (monolayer foil) | 1.00% | 19.5 | 54.7 | 62.3 |
| 5 (bilayer foil) | 4.50% | 3.5 | 23.9 | 35.8 |
| 6 (bilayer foil) | 1.80% | 7.9 | 39.2 | 60.1 |
| 7 (bilayer foil) | 0.90% | 14.3 | 51.6 | 73.3 |
| 8* (bilayer foil) | 1.00% | 2.7 | 13.0 | 19.2 |
| 9* (bilayer foil) | 0.50% | 5.0 | 21.2 | 33.4 |
| 10* (bilayer foil) | 0.20% | 6.8 | 27.7 | 48.5 |
| * inventive Example | | | | |

Data in Table 2 show that gloss values of foils in Production Examples 8-10 (inventive) decrease with increasing total content of platelet-shaped particles. In other words, platelet-shaped particles in the surface layer A imparts said surface an increasingly non-glossy and rough appearance.

For the sake of completeness, it is worth noting that this effect is also observed in foils of Production Examples 1-4 (monolayer foils, comparative) as well as with foils of Production Examples 5-7 (bilayer foils comprising PVDF as a surface layer, comparative).

Mechanical properties

Measurements of the tensile strength and elongation at break were carried out using a testing system Zwick Roell Z005, available from Zwick GmbH & Co.KG (Ulm, Germany) with 4 identical samples, wherein 5 tests were carried out for each sample according to the norm DIN ISO 527-3 (2019) in the direction of extrusion of the films (machine direction) and perpendicular to the direction of extrusion (transverse direction) at 100 mm/min.

The obtained data are summarised in Table 3 below.

**Table 3.** Mechanical properties of the production examples

| Production Example | Content of particles, wt.-% | Tensile stress at yield [MPa] | | Elongation at Break % | |
|---|---|---|---|---|---|
| | | machine direction | transverse direction | machine direction | transverse direction |
| 1 (monolayer) | 0.00% | 34 | 35 | 87% | 77% |
| 10* (bilayer) | 0.20% | 34.4 | 34 | 91.40% | 57.87% |
| 9* (bilayer) | 0.50% | 33.4 | 34.2 | 99.80% | 68.10% |
| 7 (bilayer) | 0.90% | 32.8 | 33.3 | 66.40% | 20.60% |
| 4 (monolayer) | 1.00% | 31.1 | 31.4 | 65.80% | 19.80% |
| 8* (bilayer) | 1.00% | 29.6 | 29.9 | 79.10% | 60.50% |
| 6 (bilayer) | 1.80% | 29.9 | 30.5 | 36.10% | 16.90% |
| 3 (monolayer) | 2.00% | 27.0 | 28.3 | 33.30% | 12.50% |
| 5 (bilayer) | 4.50% | 26.9 | 28.1 | 8.80% | 8.10% |
| 2 (monolayer) | 5.00% | 24.3 | 24.9 | 6.50% | 6.70% |
| * inventive Example | | | | | |

As can be readily noted from Table 3, tensile strength and elongation at break generally tend to decrease with the increasing content of platelet shaped particles in all foils. However, foils of the present invention (Production Examples 8-10) which comprise platelet-shaped particles in the PVDF matrix generally have a higher elongation at break than comparative foils but still a comparably high tensile stress at yield (Production Examples 1-7). For instance, the foil of Production Example 8 (inventive) has elongation at break of 79.10% in the machine direction and 60.50% in the transverse direction. These values are higher than those for the foil of Comparative Example 4 (monolayer).

Examples A-F Preparation of laminates

The foils of Production Examples 8-10 (inventive) were laminated onto different coloured PVC decorative foils with the PMMA side adjacent to PVC. The colours of the PVC foil were blue (Example A), grey (Example B), grey2 (Example C), grey3 (Example D), grey 4 (Example E), brown (Example F).
The layers in the laminated are thus the following: Layer A, Layer B, PVC.
TSR values of all samples were measured at the wavelength from 250 nm to 2500 nm according to norm DIN EN ISO 13468-2 (2006). A TSR values of the laminates are then calculated as described in the norm ASTM E 903-96 using the standard procedure for solar absorption, reflection and transmission (Solar spectrum according to ASTM G 173-03 (2012)) of materials using an integrating sphere.
The obtained data are summarized in Table 4 below. In all cases TSR values of laminates were significantly higher than those of the corresponding PVC foils. Also foils of the present invention improved the total TSR values. Comparative Examples 1, 4, 6 and 7 and Inventive Examples 8, 9 and 10 showed similar improvements of TSR values of the laminates over the single PVC foils. However, as shown above, foils of Inventive Examples 8, 9 and 10 were mechanically more stable than those of comparative Examples and had, in particular, a higher elongation at break.

| PVC-Decorative Foil (TSR) / Production Example (TSR) | Example A blue (TSR = 14.4%) | Example B grey1 (TSR = 26.7%) | Example C grey2 (TSR = 20.9%) | Example D grey3 (TSR = 27.7%) | Example E grey4 (TSR = 29.2%) | Example F brown (TSR = 18.7%) |
|---|---|---|---|---|---|---|
| | TSR values of laminates [%] | | | | | |
| Example 1 (TSR = 7.2%) | 19.4 | 29.9 | 25.0 | 30.6 | 32.0 | 23.0 |
| Example 4 (TSR = 10.6%) | 21.3 | 30.6 | 26.1 | 31.4 | 32.6 | 24.5 |
| Example 6 (TSR = 12.4%) | 22.4 | 30.9 | 26.7 | 31.9 | 32.9 | 25.3 |
| Example 7 (TSR = 9.5%) | 20.6 | 30.1 | 25.6 | 31.0 | 32.2 | 23.9 |
| Example 8* (TSR = 12.1%) | 22.0 | 30.6 | 26.4 | 31.5 | 32.5 | 25.0 |
| Example 9* (TSR = 9.7%) | 20.6 | 30.0 | 25.5 | 30.9 | 32.1 | 23.9 |
| Example 10* (TSR = 8.6%) | 20.0 | 29.8 | 25.2 | 30.6 | 31.9 | 23.4 |

* inventive Example

**Table 4** TSR-Values of single PVC decorative foil and single Production foils and their combined TSR as laminates

Weathering tests

The weathering tests were carried out according to DIN EN ISO 4892-2 (2013), method A with cycle No 1 at the wavelength range from 300 to 400 nm under the following conditions:

| | |
|---|---|
| Exposure period (dry / water spray) [min] | 102/18 |
| Black standard temperature [°C] | 65 +/- 3 |
| Irradiance (300 - 400nm) [W/m$^2$] | 60 +/- 2 |
| Relative humidity [%] | 65 +/-10 |
| Chamber air temperature [°C] | 38 +/- 3 |

The samples of Examples 4 and 10 were subjected to accelerated weathering test and optical assessments were made after 0 h, 2 000 h, 3 000 h, 4 000 h, 6 000 h, 8 000 h. Over the course of 8000 h no visual changes could be observed. The transmittance and colour values of the foils remained on the same level as at the start of the accelerated weathering. A slight drop of reflectance was observed, which can be explained with some relaxation of the surface due to the temperature and humidity conditions in the weathering chamber.

**Claims**

1. A coextruded multilayer foil comprising at least a layer A and a layer B, wherein the layer A comprises, based on the weight of the layer A:

   from 40.0 to 99.99 wt.-% of a fluoropolymer;
   from 0.0 to 30.0 wt.-% of a polyalkyl(meth)acrylate; and
   from 0.01 to 30.0 wt.-% of platelet-shaped filler particles having an aspect ratio of a least 1 to 10, preferably 1 to 20, more preferably 1 to 30;

   and the layer B comprises, based on the weight of the layer B:

   from 0.0 to 95.0 wt.-% of a polymethylmethacrylate;
   from 5.0 to 100.0 wt.-% of one or several impact modifiers;
   from 0.0 to 40.0 wt.-% of a fluoropolymer;
   from 0.0 to 5.0 wt.-% of one or several UV-absorbers;
   from 0.0 to 5.0 wt.-% of one or several UV-stabilizers; and
   from 0.0 to 20.0 wt.-% of an adhesion promoter selected from an adhesion-promoting copolymer, particulate silica or a combination thereof; and

   wherein the cumulative content of the polymethylmethacrylate and of one or several impact modifiers in the layer B is at least 50 wt.-%, preferably at least 60 wt.-%, more preferably at least 70 wt.-%, yet even more preferably at least 80 wt.-%, still more preferably at least 90 wt.-%, particularly preferably at least 95 wt.-%, based on the weight of the layer B.

2. Foil according to Claim 1, wherein the layer A comprises:

   from 80.0 to 99.9 wt.-%, preferably from 90.0 to 99.9 wt.-% of the fluoropolymer;
   0.0 wt.-% of the polyalkyl(meth)acrylate; and
   from 0.1 to 20.0 wt.-%, preferably from 0.1 to 10.0 wt.-% of platelet-shaped filler particles, based on the weight of the layer A.

3. Foil according to Claim 1 or 2, wherein the fluoropolymer is selected from polyvinylidene fluoride (PVDF), polyvinylfluoride (PVF), polytetrafluorethylene (PTFE), polyethylenetetrafluoroethylene (ETFE), fluorinated ethylene-propylene (FEP) or a mixture thereof.

4. Foil according to any of Claims 1 to 3, wherein the fluoropolymer is a predominantly amorphous polyvinylidenfluorid or a microcrystalline polyvinylidenfluorid, preferably having a molecular weight Mw from 50 000 to 300 000 g/mol, determined by GPC.

5. Foil according to any of Claims 1 to 4, wherein the platelet-shaped filler particles are selected from optionally coated mica, optionally coated metallic flakes, optionally coated talk, optionally coated kaolin, optionally coated glass flakes or a combination of any of those.

6. Foil according to any of Claims 1 to 5, wherein the platelet-shaped filler particles are mica coated with

   • at least one layer comprising titanium dioxide, wherein the titanium dioxide is preferably rutile;
   • optionally, at least one layer comprising tin dioxide; and
   • optionally, at least one layer comprising zircon dioxide.

7. Foil according to any of Claims 1 to 6, wherein the platelet-shaped filler particles have an average particle size of from 0.1 μm to 100 μm, preferably from 1.0 μm to 80 μm, and a thickness of from 0.1 μm to 10.0 μm, preferably

from 2.50 $\mu$m to 5.0 $\mu$m.

8. Foil according to any of Claims 1 to 7, wherein the impact modifier is a particulate impact modifier, preferably a core, core-shell, core-shell-shell or core-shell-shell-shell type impact modifier, having an average particle size of from 50 nm to 1000 nm, preferably from 100 nm to 500 nm.

9. Foil according to any of Claims 1 to 8, wherein
   the layer A has a thickness from 1.0 $\mu$m to 30.0 $\mu$m; and
   the layer B has a thickness from 15.0 $\mu$m to 200.0 $\mu$m.

10. Foil according to any of Claims 1 to 9, wherein the foil further comprises an adhesion-promoting layer C, wherein
    the layer B is located between the layer A and the layer C, and
    the layer C comprises an adhesion promoter selected from an adhesion-promoting copolymer, particulate silica or a combination thereof.

11. Foil according to any of Claims 1 to 10, wherein the adhesion-promoting copolymer comprises, based on the weight of the adhesion-promoting copolymer:

    (i) from 50.0 to 99.5 wt.-% methyl methacrylate
    (ii) from 0.5 to 25.0 wt.-% of an adhesion-promoting monomer; and
    (iii) from 0.0 to 25.0 wt.-% of other vinyl-copolymerizable monomers having no functional groups other than the vinyl function.

12. Foil according to any of Claims 1 to 11, wherein the particulate silica has a specific surface area, measured by BET method, of more than 200 $m^2$/g, preferably more than 300 $m^2$/g, more preferably more than 400 $m^2$/g, even more preferably more than 500 $m^2$/g and/or the particulate silica is a precipitated silica which preferably has a weight average particle size $d_{50}$ of from 1.0 $\mu$m to 20.0 $\mu$m, preferably from 2.0 $\mu$m to 15.0 $\mu$m, determined by laser diffraction according to ISO 13320.

13. Process for manufacturing of the foil according to any of Claims 1 to 12, wherein the process comprises a step in which the foil is moulded in a foil-moulding process, preferably in chill-roll process.

14. A multi-layer article, preferably a high-pressure laminate or an extruded PVC article, comprising a substrate which is at least partially covered by a foil according to any of Claims 1 to 12, wherein
    the layer A forms an outer surface of the multi-layer article;
    the layer B is located between the layer A and the substrate; and
    the layer C, if present, is located between the layer B and the substrate.

15. The multi-layer article according to Claim 14, wherein
    the layer B is adjacent to the layer A, and
    the layer C, if present, is adjacent to the layer B.

16. Process for manufacturing of a multi-layer article according to Claim 14 or 15, the process comprising a step of coating a substrate with a foil according to any of Claims 1 to 12 by means of co-extrusion, lamination or extrusion lamination.

17. Process according to Claim 16, wherein the multi-layer article is a high-pressure laminate and the step of coating a substrate with a foil according to any of Claims 1 to 12 is carried out at a pressure of from 1 MPa to 20 MPa, preferably of from 4 MPa to 15 MPa and a temperature of from 120 °C to 220 °C.

**Fig. 1**

**Fig. 2**

Europäisches
Patentamt

European
Patent Office

Office européen
des brevets

# EUROPEAN SEARCH REPORT

Application Number

EP 20 19 6118

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 353 238 A1 (EVONIK ROEHM GMBH [DE]) 1 August 2018 (2018-08-01) * paragraphs [0001], [0018] - [0019]; claims 1-15 * ----- | 1-17 | INV. B32B27/08 B32B27/20 B32B27/30 |
| A | US 5 372 669 A (FREEDMAN MELVIN S [US]) 13 December 1994 (1994-12-13) * column 4, line 25 - line 35 * ----- | 1-17 | |
| A,D | US 2003/091814 A1 (BENZ VOLKER [DE] ET AL) 15 May 2003 (2003-05-15) * paragraphs [0010] - [0032] * ----- | 1-17 | |

**TECHNICAL FIELDS SEARCHED (IPC)**

B32B

The present search report has been drawn up for all claims

| Place of search | Date of completion of the search | Examiner |
|---|---|---|
| The Hague | 28 January 2021 | Aspeby, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 6118

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2021

| Patent document cited in search report | | | Publication date | Patent family member(s) | | | Publication date |
|---|---|---|---|---|---|---|---|
| EP 3353238 | A1 | | 01-08-2018 | AU | 2017373597 | A1 | 20-06-2019 |
| | | | | BR | 112019011385 | A2 | 15-10-2019 |
| | | | | CA | 3042577 | A1 | 14-06-2018 |
| | | | | CN | 110049869 | A | 23-07-2019 |
| | | | | EP | 3353238 | A1 | 01-08-2018 |
| | | | | ES | 2703724 | T3 | 12-03-2019 |
| | | | | IL | 266916 | A | 30-04-2020 |
| | | | | JP | 2020513349 | A | 14-05-2020 |
| | | | | KR | 20190085155 | A | 17-07-2019 |
| | | | | PL | 3353238 | T3 | 31-05-2019 |
| | | | | TR | 201820237 | T4 | 21-01-2019 |
| | | | | US | 2019358940 | A1 | 28-11-2019 |
| | | | | WO | 2018104293 | A1 | 14-06-2018 |
| | | | | ZA | 201903191 | B | 29-01-2020 |
| US 5372669 | A | | 13-12-1994 | US | 5372669 | A | 13-12-1994 |
| | | | | US | 5700564 | A | 23-12-1997 |
| | | | | US | 5985075 | A | 16-11-1999 |
| | | | | US | 6040027 | A | 21-03-2000 |
| | | | | US | 6146744 | A | 14-11-2000 |
| | | | | US | 6156252 | A | 05-12-2000 |
| | | | | US | 6245418 | B1 | 12-06-2001 |
| | | | | US | 6299956 | B1 | 09-10-2001 |
| | | | | US | 6461555 | B1 | 08-10-2002 |
| | | | | US | 6579602 | B1 | 17-06-2003 |
| | | | | US | 6627283 | B1 | 30-09-2003 |
| US 2003091814 | A1 | | 15-05-2003 | AT | 139034 | T | 15-06-1996 |
| | | | | DK | 0548822 | T3 | 29-07-1996 |
| | | | | EP | 0548822 | A2 | 30-06-1993 |
| | | | | ES | 2089356 | T3 | 01-10-1996 |
| | | | | US | 2003091814 | A1 | 15-05-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2719170 A1
- WO 2006058584 A1
- EP 0548822 A2
- US 5221341 A
- DE 1467468
- DE 2009566
- DE 2214545
- DE 1959998
- DE 2215191
- DE 2244298
- DE 2313331
- DE 2522572
- DE 3137808
- DE 3151343
- DE 3151354
- DE 3151355
- DE 3211602
- DE 3235017
- EP 2756950 A1
- EP 0113924 A
- EP 0522351 A
- EP 0465049 A
- EP 0683028 A
- US 10040915 B2
- US 20170197391 A1

**Non-patent literature cited in the description**

- **HANS ZWEIFEL.** Plastics Additives Handbook. Hanser Verlag, 2001, 141 ff
- *Kunststoffe,* 1984, vol. 74 (10), 620-623
- *Farbe + Lack,* September 1990, vol. 96, 689-693
- Ullmann's Encyclopaedia of Industrial Chemistry. vol. A23, 642-647
- Ullmann's Encyclopaedia of Industrial Chemistry. vol. A23, 629-635
- Ullmann's Encyclopaedia of Industrial Chemistry. vol. A23, 635-642